# EUROPEAN PATENT SPECIFICATION

(11) **EP 3 922 835 B1**
(45) Date of publication and mention of the grant of the patent: **26.04.2023**
(21) Application number: 19914647.3
(22) Date of filing: 29.11.2019
(51) Int. Cl.: F02D 41/34, F02D 41/02, F01N 3/00, F02B 61/02, F02D 29/02

(54) **STRADDLED VEHICLE**
SATTELFAHRZEUG
VÉHICULE DU TYPE À SELLE

(30) Priority: 04.02.2019 JP 2019018324
(43) Date of publication of application: 15.12.2021
(73) Proprietor: Yamaha Hatsudoki Kabushiki Kaisha, Iwata-shi, Shizuoka 438-8501 (JP)
(72) Inventor: YAMAUCHI, Daisuke, Iwata-shi, Shizuoka 438-8501 (JP); SASAKI, Nozomu, Iwata-shi, Shizuoka 438-8501 (JP)
(74) Representative: Grünecker Patent- und Rechtsanwälte PartG mbB
(86) International application number: PCT/JP2019/046781
(87) International publication number: WO 2020/162002

(56) References cited:
- WO-A1-2007/049772
- JP-A- H06 159 109
- JP-A- H06 159 109
- JP-A- 2000 110 518
- JP-A- 2005 180 282
- JP-A- 2015 090 115
- JP-A- 2017 072 073
- JP-A- 2017 149 166
- JP-A- 2018 155 218
- JP-A- 2018 155 218
- US-A- 5 632 260
- US-A- 5 634 445
- US-A- 5 732 680

## Description

### Technical Field

The present teaching relates to a straddled vehicle, more particularly to a straddled vehicle including a catalyst for purifying exhaust gas discharged from a combustion chamber of an engine.

### Background Art

As one type of straddled vehicle, a motorcycle is generally known. The motorcycle includes an engine, an exhaust passage connected to a combustion chamber of the engine, and a catalyst disposed in the exhaust passage. Such a motorcycle is disclosed by International Publication No. 2016/98906, for example. JP H06 159109 A discloses a vehicle with reducedcylinder operation to control the driving force from the torque generated by the engine.

US 5 732 680 A discloses a fuel injection system, wherein fuel delivery to specific cylinders is cut so as to cause a drop in engine output torque during, for instance, an occurrence of wheel slippage.

### Citation List

### Patent Literature

PTL 1: International Publication No. 2016/98906

### Summary of Invention

### Technical Problem

In recent years, the motorcycle has also been desired to enhance its performance of purifying exhaust gas (hereinafter, referred to as exhaust gas purification performance) with use of the catalyst. A possible way to enhance the exhaust gas purification performance is to enlarge the catalyst to increase the surface area of the catalyst, for example.

In the motorcycle, however, an installation space for accommodating various parts constituting the motorcycle is limited. Thus, it is difficult to enlarge the catalyst. Enlarging the catalyst may possibly require an increase in size of the motorcycle, for the purpose of avoiding interference between the catalyst and other parts.

International Publication No. 2016/98906 discloses a technique for disposing the enlarged catalyst to enhance the exhaust gas purification performance while suppressing or reducing the increase in size of the vehicle, but does not disclose nor suggest enhancing the exhaust gas purification performance without enlarging the catalyst or achieving freedom in arrangement of the catalyst while enhancing the exhaust gas purification performance.

An object of the present invention is to provide a method for controlling a straddled vehicle and a straddled vehicle that includes a catalyst for purifying exhaust gas discharged from a combustion chamber of an engine, the straddled vehicle being capable of enhancing the exhaust gas purification performance even without enlarging the catalyst and accordingly achieving freedom in arrangement of the catalyst. According to the present invention said object is solved by a straddled vehicle having the features of independent claim 1. Moreover, said object is solved by a method for controlling a straddled vehicle having the features of independent claim 13. Preferred embodiments are laid down in the dependent claims.

In order to attain the object, the inventors of the present teaching first devised a way to achieve the freedom in arrangement of the catalyst. As a result of the devising, the inventors found that the freedom in arrangement of the catalyst can be achieved by avoiding enlargement of the catalyst.

Next, the inventors of the present teaching devised a way to enhance the exhaust gas purification performance without enlarging the catalyst. More specifically, the inventors investigated circumstances in which the exhaust gas purification performance drops. Consequently, the inventors found that the exhaust gas purification performance drops when the temperature of the catalyst rises excessively.

Thus, the inventors investigated circumstances in which the temperature of the catalyst increases excessively. As a result, the inventors found that the temperature of the catalyst rises excessively under a situation in which a minimum fuel injection, by which fuel is injected in a minimum fuel injection amount, takes place periodically. The situation in which the minimum fuel injection takes place periodically may be, e.g., a situation in which a traction control system is in operation, i.e., a situation in which drive power transmitted to a driving wheel is reduced in response to detection of idle rotation of the driving wheel.

Then, based on the above findings, the inventors further proceeded the devising. As a result, the inventors found a possibility to suppress or reduce an excessive increase in temperature of the catalyst by appropriately setting a fuel injection amount for an intermediate fuel injection, which is performed between the minimum fuel injection taking place periodically. The present teaching was completed based on these findings.

A straddled vehicle according to an embodiment of the present teaching includes an engine, an intake passage part, a throttle valve, an injector, an exhaust passage part, and a control device. The engine includes a combustion chamber. The intake passage part forms an intake passage through which intake air, which is air sucked from the atmosphere, flows toward the combustion chamber. The throttle valve is disposed in the intake passage part, and is mechanically connected to an accelerator operator, which is provided to the straddled vehicle, so as to be interlocked with movement of the accelerator operator. The injector is disposed at a location between the throttle valve and the combustion chamber, and is configured to inject fuel toward the intake air flowing through the intake passage part. The exhaust passage part forms an exhaust passage through which exhaust gas discharged from the combustion chamber flows. The control device controls the fuel injection of the injector.

The control device of the straddled vehicle according to the embodiment of the present teaching controls the fuel injection of the injector so as to satisfy the following (A), (B), and (C) in a state where the throttle valve is open and an opening degree thereof is constant.
(A) The control device controls the fuel injection of the injector such that a minimum fuel injection, by which the fuel is injected in a minimum fuel injection amount, takes place plural times intermittently.
(B) The control device controls the fuel injection of the injector such that an intermediate fuel injection takes place plural times between two of the plural minimum fuel injections taking place intermittently, the intermediate fuel injection being greater in amount than the fuel injection amount for the minimum fuel injection, the intermediate fuel injection done by accordingly injecting the fuel into the intake passage part.
(C) The control device controls the fuel injection of the injector such that amounts of the fuel injections for at least two of the plural intermediate fuel injections differ from each other.

The exhaust passage part of the straddled vehicle according to the embodiment of the present teaching includes a catalyst part. The catalyst part includes a catalyst. The catalyst purifies exhaust gas discharged from the combustion chamber in a case where the control device controls the fuel injection of the injector so as to satisfy (A), (B), and (C) described above.

With the straddled vehicle according to the embodiment of the present teaching, it is possible to suppress or reduce an excessive increase in temperature of the catalyst, even in a case where the control device controls the fuel injection of the injector such that the minimum fuel injection takes place plural times intermittently. Therefore, it is possible to enhance the exhaust gas purification performance of the catalyst even without enlarging the catalyst. Consequently, it is possible to achieve freedom in arrangement of the catalyst.

The straddled vehicle according to the embodiment of the present teaching is a vehicle including a saddle-type seat, for example. The straddled vehicle includes at least one front wheel and at least one back wheel, for example. That is, the straddled vehicle is not limited to a two-wheeled vehicle. Alternatively, the straddled vehicle may be a three-wheeled vehicle including paired left and right front wheels or paired left and right back wheels. Further alternatively, the straddled vehicle may be a four-wheeled vehicle including paired left and right front wheels and paired left and right back wheels. Examples of the straddled vehicle encompass a scooter, a moped, a snowmobile, a watercraft, and an all-terrain vehicle (ATV) and the like. For example, the straddled vehicle may be a leaning vehicle. The leaning vehicle refers to a vehicle of which vehicle body is configured to lean to the left while the leaning vehicle is making a turn to the left and to lean to the right while the leaning vehicle is making a turn to the right. For example, the straddled vehicle may be provided with a forced-induction compressor. The forced-induction compressor may be a turbocharger or a supercharger, for example. The straddled vehicle may be a hybrid vehicle including, as a driving source, an engine and an electric motor. That is, the straddled vehicle may include, as the driving source, the electric motor in addition to the engine.

In the straddled vehicle according to the embodiment of the present teaching, the engine may be an engine having a single cylinder or an engine having plural cylinders, for example. That is, the engine may be an engine having a single combustion chamber or an engine having plural combustion chambers. The combustion chamber of the engine may include a main combustion chamber and an auxiliary combustion chamber, which is connected to the main combustion chamber, for example. For the engine having plural cylinders, arrangement of the plural cylinders is not particularly limited. The engine having plural cylinders may be a V-shaped engine, an inline engine, or a horizontally-opposed engine, for example. The engine may be a forwardslanting engine of which cylinder axis lineslants forward or a back-slanting engine of which cylinder axis line slants backward. The engine may be a watercooled engine, an oil-cooled engine, or an air-cooled engine, for example. The air-cooled engine may be a natural-air-cooled engine or a forced-air-cooled engine. The engine may be a reciprocating engine or a rotary engine, for example.

In the straddled vehicle according to the embodiment of the present teaching, there is no particular limitation on the intake passage part, as long as the intake passage part forms the intake passage through which intake air, which is air sucked from the atmosphere, flows toward the combustion chamber. The intake passage is a space through which intake air flows. The intake passage part is a structure having elements such as a wall defining the space through which intake air flows. The intake passage part includes a part of the cylinder, which constitutes the engine, and a pipe connected to the cylinder, for example. That is, the intake passage part may be at least partially made of a member connected to the cylinder of the engine. In other words, the intake passage part may include an external intake passage part forming an external intake passage, which is a part of the intake passage being connected to the engine and allowing intake air, which is air sucked from the atmosphere, to flow therethrough toward the combustion chamber. In the case of the engine having the plural combustion chambers, the intake passage part may include plural branched intake passages connected to the plural combustion chambers in a one-to-one relation, for example. The plural branched intake passages may be merged into one somewhere in the intake passage part.

In the straddled vehicle according to the embodiment of the present teaching, there is no particular limitation on the throttle valve, as long as the throttle valve is disposed in the intake passage part and is mechanically connected to the accelerator operator, which is provided to the straddled vehicle, so as to be interlocked with movement of the accelerator operator. One example of the aspect in which the throttle valve is disposed in the intake passage part may be as follows. That is, the throttle valve is disposed in the intake passage rotatably around a predetermined rotational center axis line so as to adjust an amount of intake air flowing toward the combustion chamber. The predetermined rotational center axis line extends in a direction orthogonal to a flow direction of intake air in the intake passage part, for example. The throttle valve is disposed in the intake passage part in such a manner that the throttle valve is fixed to a rotation support shaft rotatably provided to the intake passage part, for example. With this, the throttle valve is disposed in the intake passage part rotatably around the rotational center axis line. By rotating around the rotational center axis line so as to change an open/close state in the intake passage part, the throttle valve can adjust the amount of intake air flowing toward the combustion chamber, for example. The throttle valve may be fixed to the rotation support shaft by any non-limited means. The throttle valve may be fixed to the rotation support shaft by a screw or the like, for example. The shape and/or the like of the throttle valve may be changed appropriately according to the shape and/or the like of the inside of the intake passage part, in which the throttle valve is disposed, for example. The throttle valve is disposed in a one-to-one relation for the combustion chamber, for example. In the case of the engine having the plural cylinders, that is, in the case of the engine having the plural combustion chambers, the throttle valves are disposed in a one-to-one relation for their respective combustion chambers.

In the straddled vehicle according to the embodiment of the present teaching, there is no particular limitation on the injector, as long as the injector is disposed at a location between the throttle valve and the combustion chamber and is configured to inject fuel toward the intake air flowing through the intake passage part. The injector only needs to be disposed further downstream than the throttle valve in the flow direction of the intake air in the intake passage part. The injector may be any one, as long as it is configured to inject fuel toward the intake air flowing at a flow rate adjusted by the throttle valve. There is no particular limitation on the position of the injector, as long as the position is between the throttle valve and the combustion chamber. For example, assume a case where the intake passage part includes a part of the cylinder, which constitutes the engine, and a pipe connected to the cylinder. In this case, the injector may be disposed at the cylinder constituting the engine among the elements of the intake passage part, or the pipe connected to the cylinder constituting the engine among the elements of the intake passage part. The fuel that is to be injected by the injector may be fossil fuel or alcohol fuel, for example. The fossil fuel may be gasoline or light oil, for example. The alcohol fuel may be methanol, ethanol, butanol, or propanol, for example.

In the straddled vehicle according to the embodiment of the present teaching, there is no particular limitation on the exhaust passage part, as long as the exhaust passage part forms the exhaust passage through which exhaust gas discharged from the combustion chamber flows. The exhaust passage is a space through which exhaust gas flows. The exhaust passage part is a structure having elements such as a wall defining the space through which exhaust gas flows. The exhaust passage part includes a part of the cylinder, which constitutes the engine, and a pipe connected to the cylinder, for example. That is, the exhaust passage part may be at least partially made of a member connected to the cylinder of the engine. In other words, the exhaust passage part may include an external exhaust passage part forming an external exhaust passage, which is a part of the exhaust passage being connected to the engine and allowing exhaust gas discharged from the combustion chamber to flow therethrough. In the case of the engine having the plural combustion chambers, the exhaust passage part may include plural branched exhaust passages connected to the plural combustion chambers in a one-to-one relation, for example. The plural branched exhaust passages may be merged into one somewhere in the exhaust passage part.

In the straddled vehicle according to the embodiment of the present teaching, there is no particular limitation on the catalyst part, as long as the catalyst part includes a catalyst for purifying exhaust gas discharged from the combustion chamber in a case where the control device controls the fuel injection of the injector so as to satisfy (A), (B), and (C) described above. The catalyst may purify exhaust gas discharged from the combustion chamber in cases other than the case where the control device controls the fuel injection of the injector so as to satisfy (A), (B), and (C) described above. The catalyst has a porous structure, for example. The porous structure refers to a structure with multiple pores penetrated in a flow direction of exhaust gas. The catalyst is a three-way catalyst, for example. The three-way catalyst removes hydrocarbon (HC), carbon monoxide (CO), and nitrogen oxide (NOx) in the exhaust gas through oxidization or reduction. The three-way catalyst is a type of oxidationreduction catalyst. The catalyst includes a base and a catalyst substance, for example. The base may be made of a metal or ceramic, for example. The catalyst substance includes a noble metal, for example. The noble metal is not particularly limited, as long as it is capable of purifying exhaust gas. Examples of the noble metal encompass platinum, palladium, and rhodium or the like.

In the straddled vehicle according to the embodiment of the present teaching, there is no particular limitation on the control device, as long as the control device is configured to control fuel injection of the injector. The control device is an electric control unit (ECU), for example. The ECU is made of combination of an integrated circuit (IC), an electric component, and a circuit board or the like, for example.

In the fuel injection of the injector controlled by the control device of the straddled vehicle according to the embodiment of the present teaching, the fuel injection amount for the minimum fuel injection, i.e., the minimum fuel injection amount includes nil. In other words, the fuel injection amount for the minimum fuel injection may be nil. The fuel injection amount for the minimum fuel injection is smaller than a half of the fuel injection amount for the intermediate fuel injection, for example. Preferably, the fuel injection amount for the minimum fuel injection is smaller than one-tenth of the fuel injection amount for the intermediate fuel injection. More preferably, the fuel injection amount for the minimum fuel injection is smaller than one-twentieth of the fuel injection amount for the intermediate fuel injection.

In the fuel injection of the injector controlled by the control device of the straddled vehicle according to the embodiment of the present teaching, a fuel injection amount for an intermediate fuel injection that follows the minimum fuel injection is preferably smaller than a predetermined target injection amount. For example, the predetermined target injection amount is an amount of fuel injected in a fuel injection taking place immediately before the control device starts controlling the injector so as to satisfy (A), (B), and (C) described above in a state where the throttle valve is open and an opening degree thereof is constant. In other words, the predetermined target injection amount is a fuel injection amount corresponding to the opening degree of the throttle valve in a state where the throttle valve is open and the opening degree thereof is constant.

In the fuel injection of the injector controlled by the control device of the straddled vehicle according to the embodiment of the present teaching, the expression "two of the plural minimum fuel injections taking place intermittently" encompasses an aspect in which an additional minimum fuel injection exists between the two of the plural minimum fuel injections, for example. In other words, the above expression includes an aspect in which the intermediate fuel injections and the minimum fuel injections take place alternately between the two of the plural minimum fuel injections.

In the fuel injection of the injector controlled by the control device of the straddled vehicle according to the embodiment of the present teaching, the aspect in which "amounts of the fuel injections for at least two of the plural intermediate fuel injections differ from each other" may be an aspect in which the fuel injection amount decreases in a stepwise manner between at least two of the plural intermediate fuel injections or an aspect in which the fuel injection amount increases in a stepwise manner between at least two of the plural intermediate fuel injections, for example. The "at least two of the plural intermediate fuel injections" are not limited to the ones taking place successively.

In the straddled vehicle according to the embodiment of the present teaching, the control device may control the fuel injection of the injector such that the minimum fuel injection takes place plural times intermittently while a traction control system, a rev limiter, or a speed limiter is in operation, for example. The traction control system is configured to suppress or reduce slippage of the back wheel. The rev limiter is configured to restrict a revolution speed of the engine. The speed limiter is configured to restrict a vehicle speed at which the straddled vehicle travels.

In the straddled vehicle according to the embodiment of the present teaching, the exhaust passage part may further include a silencer for reducing noise caused by exhaust gas passing through the exhaust passage part, and the catalyst part may be at least partially positioned closer to the combustion chamber than the silencer is.

According to the aspect described above, a path length from the combustion chamber to the catalyst part can be shortened. Consequently, the temperature of the exhaust gas flowing into the catalyst included in the catalyst part becomes high. This can shorten a period of time taken until activation of the catalyst at the start of the engine.

In the straddled vehicle according to the embodiment of the present teaching, the engine may include a crankshaft of which rotational center axis line lies along a vehicle left-right direction, and the catalyst part may be at least partially positioned further forward than the rotational center axis line of the crankshaft in a vehicle front-back direction.

According to the aspect described above, the path length from the combustion chamber to the catalyst part can be further shortened. Consequently, the temperature of exhaust gas flowing into the catalyst included in the catalyst part becomes high. This can shorten a period of time taken until activation of the catalyst at the start of the engine.

The straddled vehicle according to the embodiment of the present teaching may further include a front wheel positioned more forward than the engine in the vehicle front-back direction, and the catalyst part may be at least partially positioned more downward than a horizontal plane passing through a center of the front wheel.

According to the aspect described above, it is possible to lower the center of gravity of the straddled vehicle.

In the straddled vehicle according to the embodiment of the present teaching, the engine may be disposed such that a center axis line of a cylinder bore, which defines a part of the combustion chamber, lies along a vehicle up-down direction, and the catalyst part may be disposed such that a flow direction of exhaust gas flowing through the catalyst part lies along the vehicle up-down direction.

In the aspect described above, a length of the catalyst part in the vehicle front-back direction can be shortened. This can suppress or reduce an increase in size of the vehicle in the vehicle front-back direction, where the catalyst part is disposed in front of the engine, for example.

In the straddled vehicle according to the embodiment of the present teaching, the engine may be disposed such that the center axis line of the cylinder bore, which defines a part of the combustion chamber, lies along the vehicle up-down direction, and the catalyst part may be disposed such that the flow direction of the exhaust gas flowing through the catalyst part lies along the vehicle left-right direction.

In the aspect described above, the length of the catalyst part in the vehicle front-back direction can be shortened. This can suppress or reduce an increase in size of the vehicle in the vehicle front-back direction, where the catalyst part is disposed in front of the engine, for example.

In the straddled vehicle according to the embodiment of the present teaching, the engine may be disposed such that the center axis line of the cylinder bore, which defines a part of the combustion chamber, lies along the vehicle front-back direction, and the catalyst part may be disposed such that the flow direction of the exhaust gas flowing through the catalyst part lies along the vehicle front-back direction.

In the aspect described above, a length of the catalyst part in the vehicle up-down direction can be shortened. This can suppress or reduce an increase in size of the vehicle in the vehicle up-down direction, where the catalyst part is disposed below the engine, for example.

In the straddled vehicle according to the embodiment of the present teaching, the engine may include the crankshaft of which rotational center axis line lies along the vehicle left-right direction, and the catalyst part may be at least partially positioned in front of the straight line being orthogonal to the center axis line of the cylinder bore and passing through the rotational center axis line of the crankshaft in the vehicle front-back direction when viewed in the vehicle left direction or the vehicle right direction.

According to the aspect described above, the path length from the combustion chamber to the catalyst part can be further shortened. Consequently, the temperature of the exhaust gas flowing into the catalyst included in the catalyst part becomes high. This can shorten a period of time taken until activation of the catalyst at the start of the engine.

In the straddled vehicle according to the embodiment of the present teaching, the engine may include the crankshaft of which rotational center axis line lies along the vehicle left-right direction, and the catalyst part may be at least partially positioned in the back of the straight line being orthogonal to the center axis line of the cylinder bore and passing through the rotational center axis line of the crankshaft in the vehicle front-back direction when viewed in the vehicle left direction or the vehicle right direction.

In the aspect described above, it is possible to suppress or reduce an increase in size of the vehicle in the front-back direction.

In the straddled vehicle according to the embodiment of the present teaching, the engine may include a crankshaft of which rotational center axis line lies along the vehicle front-back direction.

The above-described object and other objects, features, aspects, and advantages of the present teaching will be further clarified from detailed descriptions of embodiments of the present teaching that will be given below based on the accompanying drawings.

As used herein, the term "and/or" includes any and all combinations of one or more of the associated listed items.

As used herein, the terms "including", "comprising", or "having", and variations thereof specify the presence of stated features, steps, operations, elements, components, and/or equivalents thereof, and can include one or more of steps, operations, elements, components, and/or their groups.

Unless otherwise defined, all terms (including technical and scientific terms) used herein have the same meaning as commonly understood by one of ordinary skilled in the art to which the present teaching belongs.

It will be further understood that terms, such as those defined in commonly used dictionaries, should be interpreted as having a meaning that is consistent with their meaning in the context of the present teaching and relevant art and should not be interpreted in an idealized or overly formal sense unless expressly so defined herein.

It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the description given below, for the purposes of explanation, numerous specific details are set forth in order to provide a thorough understanding of the present teaching. It will be apparent, however, that those skilled in the art may practice the present teaching without these specific details. The present teaching is to be considered as an exemplification of the present teaching, and is not intended to limit the present teaching to the specific embodiments illustrated by drawings or descriptions below.

### Advantageous Effects of Invention

According to the present teaching, it is possible to enhance exhaust gas purification performance of a catalyst even without enlarging the catalyst, thereby achieving freedom in arrangement of the catalyst.

### Brief Description of Drawings

[FIG. 1] A drawing including a right side view of a straddled vehicle according to an embodiment of the present teaching, a schematic view of an engine, an intake passage part, and an exhaust passage part of the straddled vehicle, and a graph showing one example of a fuel injection mode in which an injector of the straddled vehicle performs intermittent injection control.
[FIG. 2] A right side view of the engine of the straddled vehicle shown in FIG. 1.
[FIG. 3] A functional block diagram of a control device of the straddled vehicle shown in FIG. 1.
[FIG. 4] A drawing showing one example of a fuel injection mode in which the injector of the straddled vehicle shown in FIG. 1 performs the intermittent injection control, in a case where a difference between a rotation speed difference value and a predetermined determination difference value is small.
[FIG. 5] A drawing showing one example of a fuel injection mode in which the injector of the straddled vehicle shown in FIG. 1 performs the intermittent injection control, in a case where a difference between a rotation speed difference value and the predetermined determination difference value is large.
[FIG. 6] A flowchart of the intermittent injection control that is to be executed by the control device of the straddled vehicle shown in FIG. 1.
[FIG. 7] A drawing showing, as a comparative example relative to the example of the present teaching shown in FIG. 4, one example of a fuel injection mode of the injector, where a difference between a rotation speed difference value and a predetermined determination difference value is small.
[FIG. 8] A drawing showing, as a comparative example relative to the example of the present teaching shown in FIG. 5, one example of a fuel injection mode of the injector, where a difference between a rotation speed difference value and the predetermined determination difference value is large.

### Description of Embodiments

With reference to the drawings, the following will describe details of a straddled vehicle according to embodiments of the present teaching. The embodiments below are described merely by way of example. The present teaching should not be interpreted as being limited to the embodiments described below.

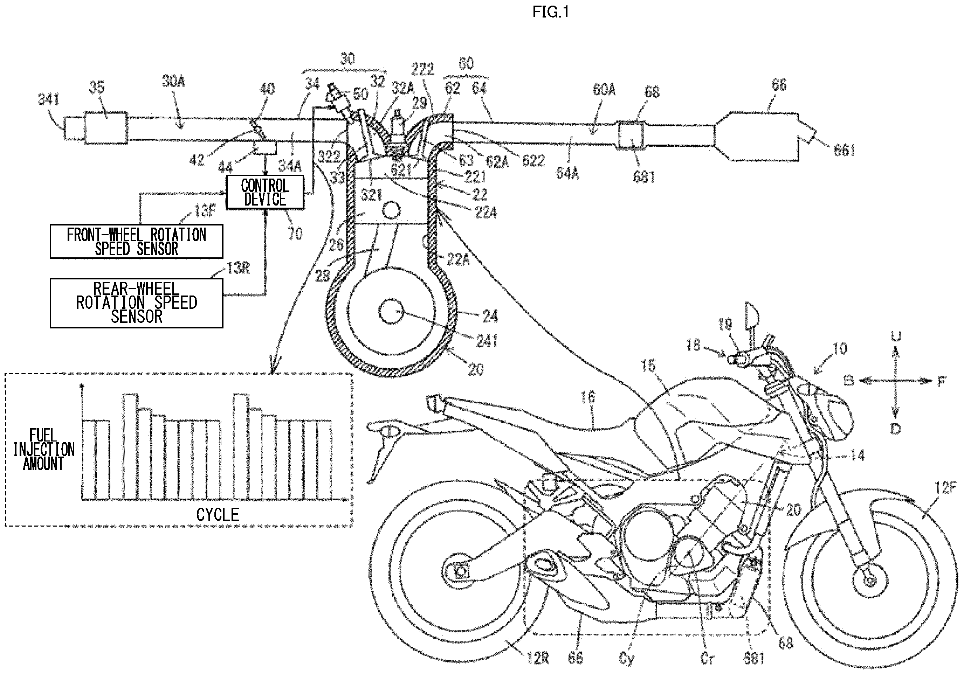

With reference to FIG. 1, a straddled vehicle 10 according to an embodiment of the present teaching will be described. FIG. 1 includes a right side view of the straddled vehicle 10, a schematic view of an engine 20, an intake passage part 30, and an exhaust passage part 60 of the straddled vehicle 10, and one example of a fuel injection mode in which an injector 50 of the straddled vehicle 10 performs intermittent injection control.

Herein, directions regarding the straddled vehicle 10 are defined as below.

The front direction of the straddled vehicle 10 is defined as vehicle front direction F. The back direction of the straddled vehicle 10 is defined as vehicle back direction B. The left direction of the straddled vehicle 10 is defined as vehicle left direction L. The right direction of the straddled vehicle 10 is defined as vehicle right direction R. The up direction of the straddled vehicle 10 is defined as a vehicle up direction U. The down direction of the straddled vehicle 10 is defined as a vehicle down direction D. A front-back direction of the straddled vehicle 10 is defined as a vehicle front-back direction FB. A left-right direction of the straddled vehicle 10 is defined as a vehicle left-right direction LR. An up-down direction of the straddled vehicle 10 is defined as a vehicle up-down direction UD. The front, back, up, down, left and right of the straddled vehicle 10 are respectively the front, back, up, down, left, and right in a view of a rider sitting on a seat 16 of the straddled vehicle 10.

Herein, axial lines and members extending in the front-back direction do not always mean only axial lines and members being in parallel with the front-back direction. The phrase, "The axial lines and members extending in the front-back direction" encompasses axial lines and members slanting at an angle degree range within ±45 degrees with respect to the front-back direction.. Similarly, the phrase, "The axial lines and members extending in the up-down direction" encompasses axial lines and members slanting at an angle degree range within ±45 degrees with respect to the up-down direction. The phrase, 'The axial lines and members extending in the left-right direction' encompasses axial lines and members slanting at an angle degree range within ±45 degrees with respect to the left-right direction.

Herein, assuming that arbitrary two members are defined as a first member and a second member, a relation between these two members are expressed as below. Here, the first member and the second member are members constituting the straddled vehicle 10.

Herein, the expression "the first member is positioned more forward than the second member" means the following state. That is, the first member is disposed in front of a plane that passes through a front end of the second member and that is orthogonal to the front-back direction. In this case, the first member and the second member may be or may not be aligned in the front-back direction. This definition is applicable to other directions than the front-back direction.

Herein, the expression "the first member is disposed in front of the second member" means the following state. That is, the first member is at least partially disposed in an area that the second member passes when being translated forward. That is, the first member may be accommodated in the area that the second member passes when being translated forward, or may protrude from the area that the second member passes when being translated forward. According to this definition, the first member and the second member are aligned in the front-back direction. This definition is applicable to directions other than the front-back direction.

The straddled vehicle 10 is a motorcycle that is a leaning vehicle. The straddled vehicle 10 includes a front wheel 12F, a back wheel 12R, a vehicle body frame 14, the seat 16, and a handle 18.

The front wheel 12F is supported by the vehicle body frame 14. The front wheel 12F is positioned more forward than the engine 20 when viewed in the vehicle left direction L or the vehicle right direction R. When the handle 18 is manipulated, the front wheel 12F is steered. That is, the front wheel 12F is a steering wheel.

The back wheel 12R is supported by the vehicle body frame 14. The back wheel 12R is positioned more backward than the engine 20 when viewed in the vehicle left direction L or the vehicle right direction R. Upon reception of drive power from the engine 20, the back wheel 12R rotates. That is, the back wheel 12R is a driving wheel.

The seat 16 is supported by the vehicle body frame 14. The passenger drives the straddled vehicle 10 while sitting on the seat 16, for example.

The straddled vehicle 10 further includes the engine 20, an intake passage part 30, a throttle valve 40, the injector 50, an exhaust passage part 60, and a control device 70. These will be described below.

The engine 20 is a single-cylinder engine including a single cylinder. That is, the engine 20 is an engine including a single combustion chamber 224. The engine 20 is a four-stroke engine. The four-stroke engine is an engine in which an intake stroke, a compression stroke, a combustion stroke (expansion stroke), and an exhaust stroke are repeated. In the four-stroke engine, the intake stroke, the compression stroke, the combustion stroke (expansion stroke), and the exhaust stroke constitute one cycle.

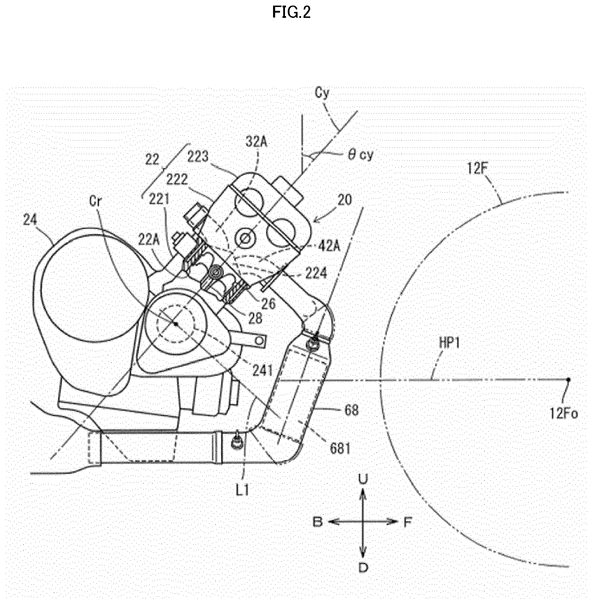

With reference to FIG. 2, the following will describe details of the engine 20. FIG. 2 is a right side view of the engine 20.

The engine 20 includes a cylinder 22 and a crankcase 24. These will be described below.

The cylinder 22 is connected to an upper end part of the crankcase 24. The cylinder 22 has a cylinder body 221, a cylinder head 222, and a head cover 223.

The cylinder body 221 is connected to the upper end of the crankcase 24. The cylinder head 222 is connected to an upper end of the cylinder body 221. The cylinder head cover 223 is connected to an upper end of the cylinder head 222.

The cylinder body 221 has a cylinder bore 22A. A piston 26 is slidably disposed at the cylinder bore 22A. The piston 26 is connected to a crankshaft 241 (see FIG. 1) via a connecting rod 28.

The cylinder bore 22A has a center axis line Cy extending in the vehicle up-down direction UD. That is, the engine 20 is disposed such that the center axis line Cy of the cylinder bore 22A extends along the vehicle up-down direction UD. When viewed in the vehicle left direction L or the vehicle right direction R, the center axis line Cy of the cylinder bore 22A is slanted in the front-back direction with respect to the up-down direction. The center axis line Cy of the cylinder bore 22A is slanted such that the cylinder 22 slants forward. That is, the center axis line Cy of the cylinder bore 22A is slanted so as to extend further forward with its increasing proximity to the upper side. When viewed in the vehicle left direction L or the vehicle right direction R, an slant angle θcy of the center axis line Cy of the cylinder bore 22A with respect to the up-down direction is within a range of 0 degree to 45 degrees inclusive.

In the cylinder 22, the combustion chamber 224 is formed. The combustion chamber 224 is formed by a lower surface of the cylinder head 222, the cylinder bore 22A, and an upper surface of the piston 26. That is, the cylinder bore 22A defines a part of the combustion chamber 224. When viewed in the vehicle left direction L or the vehicle right direction R, the combustion chamber 224 is positioned more upward and more forward than a rotational center axis line Cr of the crankshaft 241.

Referring to FIG. 1, a tip end part of a spark plug 29 is disposed in the combustion chamber 224. A spark discharge is generated at the distal end part of the spark plug 29. By the spark discharge, an air-fuel mixture in the combustion chamber 224 is ignited. The air-fuel mixture is a mixture of intake air and fuel.

Referring to FIG. 2, the crankcase 24 stores the crankshaft 241 therein. The rotational center axis line Cr of the crankshaft 241 extends in the vehicle left-right direction LR. That is, the engine 20 includes the crankshaft 241 having the rotational center axis line Cr extending along the left-right direction of the vehicle.

Referring to FIG. 1, the intake passage part 30 forms an intake passage 30A through which intake air, which is air sucked from the atmosphere, flows toward the combustion chamber 224. The intake passage 30A is a space through which the intake air passes. The intake passage part 30 is a structure having elements such as a wall defining the space through which intake air passes.

The intake passage part 30 includes an internal intake passage part 32 and an external intake passage part 34. These will be described below.

The internal intake passage part 32 is a part of the intake passage part 30. The internal intake passage part 32 forms an internal intake passage 32A, which is a part of the intake passage 30A. The internal intake passage part 32 is made of a part of the cylinder head 222. In other words, the internal intake passage 32A, which is a part of the intake passage 30A, is provided at the cylinder head 222. A space defined by the internal intake passage part 32, i.e., a space into which the intake air flows is connected to the combustion chamber 224. That is to say, the internal intake passage 32A, which is a part of the intake passage 30A and is formed by the internal intake passage part 32, is connected to the combustion chamber 224.

The cylinder head 222 has a surface defining the combustion chamber 224, the surface having a combustion chamber intake vent 321. The combustion chamber intake vent 321 is provided at a downstream end of the internal intake passage part 32. The cylinder head 222 has, in its outer surface, an intake vent 322. The intake vent 322 is provided at an upstream end of the internal intake passage part 32. The number of combustion chamber intake vents 321 provided to one combustion chamber 224 may be one or two or more. In the present embodiment, one combustion chamber intake vent 321 is provided to one combustion chamber 224.

In the internal intake passage 32A, which is formed by the internal intake passage part 32, an intake valve 33 configured to open or close the combustion chamber intake vent 321 is disposed. One intake valve 33 is provided to each combustion chamber intake vent 321. In other words, one intake valve 33 is provided to one combustion chamber intake vent 321. The intake valve 33 is driven by a valve gear (not shown) stored in the cylinder head 222. The valve gear operates in conjunction with the crankshaft 241.

The external intake passage part 34 is a part of the intake passage part 30. The external intake passage part 34 forms an external intake passage 34A, which is a part of the intake passage 30A. The external intake passage part 34 is connected to the internal intake passage part 32. More specifically, a downstream end of the external intake passage part 34 is connected to a part of the outer surface of the cylinder head 222, the part surrounding the intake vent 322 (i.e., the upstream end of the internal intake passage 32A). The external intake passage part 34 is constituted by a pipe connected to a part of the cylinder head 222, which constitutes the internal intake passage part 32, for example. The downstream end of the external intake passage 34A, which is formed by the external intake passage part 34, is connected to the upstream end of the internal intake passage 32A, which is formed by the internal intake passage part 32. That is to say, a space defined by the external intake passage part 34 is connected to the space defined by the internal intake passage part 32. This allows the intake air to flow from the external intake passage 34A to the internal intake passage 32A.

The external intake passage part 34 has an atmosphere intake vent 341 facing the atmosphere. The atmosphere intake vent 341 is provided at an upstream end of the external intake passage part 34. Through the atmosphere intake vent 341, air is sucked from the atmosphere. The air having flowed into the external intake passage part 34 through the atmosphere intake vent 341 is supplied to the engine 20.

The external intake passage part 34 is provided with an air cleaner 35 for purifying air. Thus, the air that is to be supplied to the engine 20 is the air having passed through the air cleaner 35.

The throttle valve 40 is disposed in the intake passage part 30. More specifically, the throttle valve 40 is disposed in the external intake passage part 34 of the intake passage part 30.

The throttle valve 40 is disposed in the intake passage 30A, which is formed by the intake passage part 30. More specifically, the throttle valve 40 is disposed in the external intake passage 34A, which is formed by the external intake passage part 34 of the intake passage part 30.

One throttle valve 40 is provided to each combustion chamber 224. In other words, one throttle valve 40 is provided to one combustion chamber 224.

The throttle valve 40 is disposed in the external intake passage 34A rotatably around a predetermined rotational center axis line so as to adjust an amount of intake air flowing toward the combustion chamber 224. The predetermined rotational center axis line extends in a direction orthogonal to a flow direction of the intake air in the intake passage part 30. The throttle valve 40 is disposed in the external intake passage part 34 with being fixed to a rotation support shaft 42, which is rotatably provided to the external intake passage part 34. The throttle valve 40 can adjust the amount of intake air flowing toward the combustion chamber 224 by rotating about the rotational center axis line so as to change an open/close state in the external intake passage part 34, for example. The throttle valve is fixed to the rotation support shaft 42 by a screw or the like, for example.

The straddled vehicle 10 further includes an accelerator operator 19. The accelerator operator 19 is provided to the handle 18.

The throttle valve 40 is mechanically connected to the accelerator operator 19, which is provided to the straddled vehicle 10. The throttle valve 40 is interlocked with movement of the accelerator operator 19. More specifically, when the accelerator operator 19 is manipulated to rotate in a first direction, the throttle valve 40 moves to increase the amount of intake air passing through the external intake passage 34A. Meanwhile, when the accelerator operator 19 is manipulated to rotate in a second direction (a direction reverse to the first direction), the throttle valve 40 moves to reduce the amount of intake air passing through the external intake passage 34A. That is, in response to movement of the accelerator operator 19, the throttle valve 40 adjusts the amount of intake air passing through the external intake passage 34A. An opening degree of the throttle valve 40 changes according to the rotation operation amount of the accelerator operator 19 in the first direction.

The straddled vehicle 10 further includes a throttle opening sensor 44. The throttle opening sensor 44 is configured to detect the opening degree of the throttle valve 40. The throttle opening sensor 44 is provided in the external intake passage part 34. The throttle opening sensor 44 inputs, to the control device 70, a signal indicating the detected opening degree of the throttle valve 40.

The injector 50 injects fuel toward the intake air flowing through the intake passage part 30. More specifically, the injector 50 injects the fuel toward the intake air flowing through the internal intake passage part 32 of the intake passage part 30. The injector 50 injects the fuel toward the intake air having passed through the air cleaner 35, which is provided in the external intake passage part 34 of the intake passage part 30.

The injector 50 is disposed at a location between the throttle valve 40 and the combustion chamber 224. More specifically, the injector 50 is disposed in the internal intake passage part 32 of the intake passage part 30. That is to say, the injector 50 is provided to the cylinder head 222.

One injector 50 is provided to each combustion chamber 224. In other words, one injector 50 is provided to one combustion chamber 224.

The straddled vehicle 10 further includes a fuel tank 15 (see FIG. 1). The injector 50 is connected to a fuel pump (not shown) disposed in the fuel tank 15. The fuel pump is configured to supply, to the injector 50, fuel in the fuel tank 15.

The exhaust passage part 60 forms an exhaust passage 60A through which exhaust gas discharged from the combustion chamber 224 flows. The exhaust passage 60A is a space through which the exhaust gas discharged from the combustion chamber 224 passes. The exhaust passage part 60 is a structure having elements such as a wall defining the space through which the exhaust gas discharged from the combustion chamber 224 passes.

The exhaust passage part 60 includes an internal exhaust passage part 62 and an external exhaust passage part 64. These will be described below.

The internal exhaust passage part 62 is a part of the exhaust passage part 60. The intake exhaust passage part 62 forms an internal exhaust passage 62A, which is a part of the exhaust passage 60A. The internal exhaust passage part 62 is made of a part of the cylinder head 222. In other words, the internal exhaust passage 62A, which is a part of the exhaust passage 60A, is provided in the cylinder head 222. A space defined by the internal exhaust passage part 62, i.e., a space into which the exhaust gas discharged from the combustion chamber 224 flows is connected to the combustion chamber 224. That is to say, the internal exhaust passage 62A, which is a part of the exhaust passage 60A and is formed by the internal exhaust passage part 62, is connected to the combustion chamber 224.

The surface of the cylinder head 222 which surface defines the combustion chamber 224 has a combustion chamber exhaust vent 621. The combustion chamber exhaust vent 621 is provided at an upstream end of the internal exhaust passage part 62. The cylinder head 222 has, in its outer surface, an exhaust vent 622. The exhaust vent 622 is provided at an downstream end of the internal exhaust passage part 62. The number of combustion chamber exhaust vents 621 provided to one combustion chamber 224 may be one or two or more. In the present embodiment, one combustion chamber exhaust vent 621 is provided to one combustion chamber 224.

In the internal exhaust passage 62A, which is formed by the internal exhaust passage part 62, an exhaust valve 63 configured to open or close the combustion chamber exhaust vent 621 is disposed. One exhaust valve 63 is provided to each combustion chamber exhaust vent 621. In other words, one exhaust valve 63 is provided to one combustion chamber exhaust vent 621. Similarly to the intake valve 33, the exhaust valve 63 is driven by a valve gear (not shown) stored in the cylinder head 222.

The external exhaust passage part 64 is a part of the exhaust passage part 60. The external exhaust passage part 64 forms an external exhaust passage 64A, which is a part of the exhaust passage 60A. The external exhaust passage part 64 is connected to the internal exhaust passage part 62. More specifically, an upstream end of the external exhaust passage part 64 is connected to a part of the outer surface of the cylinder head 222, the part surrounding the exhaust vent 622 (i.e., the downstream end of the internal exhaust passage 62A). The external exhaust passage part 64 is constituted by a pipe connected to a part of the cylinder head 222, which constitutes the internal exhaust passage part 62, for example. The upstream end of the external exhaust passage 64A, which is formed by the external exhaust passage part 64, is connected to the downstream end of the internal exhaust passage 62A, which is formed by the internal exhaust passage part 62. That is to say, a space defined by the external exhaust passage part 64 is connected to the space defined by the internal exhaust passage part 62. This allows the exhaust gas to flow from the internal exhaust passage 62A to the external exhaust passage 64A.

The external exhaust passage part 64 includes a silencer 66 and a catalyst part 68. These will be described below.

The silencer 66 is configured to reduce noise caused by the exhaust gas flowing through the exhaust passage part 60. The silencer 66 has an atmosphere discharge vent 661 facing the atmosphere. The exhaust gas flowing in the exhaust passage part 60 passes through the catalyst part 68, and is then discharged to the atmosphere via the atmosphere discharge vent 661.

The catalyst part 68 has a main catalyst 681 as the catalyst. The main catalyst 681 is a so-called three-way catalyst. The main catalyst 681 is configured to purify the exhaust gas discharged from the combustion chamber 224. More specifically, the exhaust gas discharged from the combustion chamber 224 flows into the catalyst part 68 and is purified by passing through the main catalyst 681.

Referring to FIG. 1, the catalyst part 68 is at least partially positioned closer to the combustion chamber 224 than the silencer 66 is. In the present embodiment, the catalyst part 68 is entirely positioned further upstream than the silencer 66 in a flow direction of the exhaust gas in the external exhaust passage part 64. This can shorten a path length from the combustion chamber 224 to the catalyst part 68. Consequently, the temperature of the exhaust gas flowing into the main catalyst 681 included in the catalyst part 68 becomes high. This can shorten a period of time taken until activation of the main catalyst 681 at the start of the engine 20.

Referring to FIG. 2, the catalyst part 68 is at least partially positioned more forward than the rotational center axis line Cr of the crankshaft 241 in the vehicle front-back direction FB. In the present embodiment, the catalyst part 68 is entirely positioned more forward than the rotational center axis line Cr of the crankshaft 241 in the vehicle front-back direction FB. This can further shorten the path length from the combustion chamber 224 to the catalyst part 68. Consequently, the temperature of the exhaust gas flowing into the main catalyst 681 included in the catalyst part 68 becomes high. This can shorten a period of time taken until activation of the main catalyst 681 at the start of the engine 20.

Referring to FIG. 2, an upstream end of the catalyst part 68 in the flow direction of the exhaust gas in the external exhaust passage part 64 is positioned more upward than a downstream end of the catalyst part 68 in the flow direction of the exhaust gas in the external exhaust passage part 64, when viewed in the vehicle up-down direction UD. That is, the catalyst part 68 is disposed such that the direction of the exhaust gas flowing therethrough lies along the vehicle up-down direction UD. This can shorten a length of the catalyst part 68 in the vehicle front-back direction FB. This can suppress or reduce an increase in size of the straddled vehicle 10 in the vehicle front-back direction FB, where the catalyst part 68 is disposed in front of the engine 20 as in the present embodiment.

Referring to FIG. 2, assume a horizontal plane HP1 passing through a center 12Fo of the front wheel 12F. When viewed in the vehicle left direction L or the vehicle right direction R, the center of the front wheel 12F coincides with a rotational center axis line of the front wheel 12F.

Referring to FIG. 2, the catalyst part 68 is at least partially positioned more downward than the horizontal plane HP1 passing through the center of the front wheel 12F. The upstream end of the catalyst part 68 in the flow direction of the exhaust gas in the exhaust passage part 60 is positioned more upward than the horizontal plane HP1 in the vehicle up-down direction UD, when viewed in the vehicle left direction L or the vehicle right direction R. The downstream end of the catalyst part 68 in the flow direction of the exhaust gas in the exhaust passage part 60 is positioned more downward than the horizontal plane HP1 in the vehicle up-down direction UD, when viewed in the vehicle left direction L or the vehicle right direction R. This can lower the center of gravity of the straddled vehicle 10.

Referring to FIG. 2, assume a straight line L1. When viewed in the vehicle left direction L or the vehicle right direction R, the straight line L1 is a straight line that is orthogonal to the center axis line Cy of the cylinder bore 22A and that passes through the rotational center axis line Cr of the crankshaft 241.

Referring to FIG. 2, when viewed in the vehicle left direction L or the vehicle right direction R, the catalyst part 68 is at least partially positioned in front of the straight line L1 in the vehicle front-back direction FB. The upstream end of the catalyst part 68 in the flow direction of the exhaust gas in the exhaust passage part 60 is positioned in front of the straight line L1 in the vehicle front-back direction FB, when viewed in the vehicle left direction L or the vehicle right direction R. This can further shorten the path length from the combustion chamber 224 to the catalyst part 68. Consequently, the temperature of the exhaust gas flowing into the main catalyst 681 included in the catalyst part 68 becomes high. This can shorten a period of time taken until activation of the main catalyst 681 at the start of the engine 20.

Referring to FIG. 2, the catalyst part 68 is at least partially positioned in the back of the straight line L1 in the vehicle front-back direction FB, when viewed in the vehicle left direction L or the vehicle right direction R. The downstream end of the catalyst part 68 in the flow direction of the exhaust gas in the exhaust passage part 60 is positioned in the back of the straight line L1 in the vehicle front-back direction FB, when viewed in the vehicle left direction L or the vehicle right direction R. This can suppress or reduce an increase in size of the straddled vehicle 10 in the vehicle front-back direction FB.

A portion of the catalyst part 68 that portion is in front of the straight line L1 in the vehicle front-back direction FB when viewed in the vehicle left direction L or the vehicle right direction R is larger than a portion of the catalyst part 68 that portion is in the back of the straight line L1 in the vehicle front-back direction FB when viewed in the vehicle left direction L or the vehicle right direction R. In other words, a half or more of the catalyst part 68 is positioned in front of the straight line L1 in the vehicle front-back direction FB when viewed in the vehicle left direction L or the vehicle right direction R.

Referring to FIG. 1, the control device 70 is configured to control the fuel injection of the injector 50. The control device 70 controls the fuel injection of the injector 50 so as to satisfy the following (A), (B), and (C) in a state where the throttle valve 40 is open and an opening degree thereof is constant (hereinafter, this state will be referred to as a throttle opening constant state).
(A) The control device 70 controls the fuel injection of the injector 50 such that a minimum fuel injection, by which fuel is injected in a minimum fuel injection amount, takes place plural times intermittently.
(B) The control device 70 controls the fuel injection of the injector 50 such that, an intermediate fuel injection takes place plural times between two of the plural minimum fuel injections taking place intermittently, the intermediate fuel injection being greater in amount than the fuel injection amount for the minimum fuel injection, the intermediate fuel injection done by accordingly injecting the fuel into the intake passage part 30.
(C) The control device 70 controls the fuel injection of the injector 50 such that amounts of the fuel injections for at least two of the plural intermediate fuel injections differ from each other.

The control device 70 is an electric control unit (ECU), for example. The ECU is made of combination of an integrated circuit (IC), an electric component, and a circuit board or the like, for example.

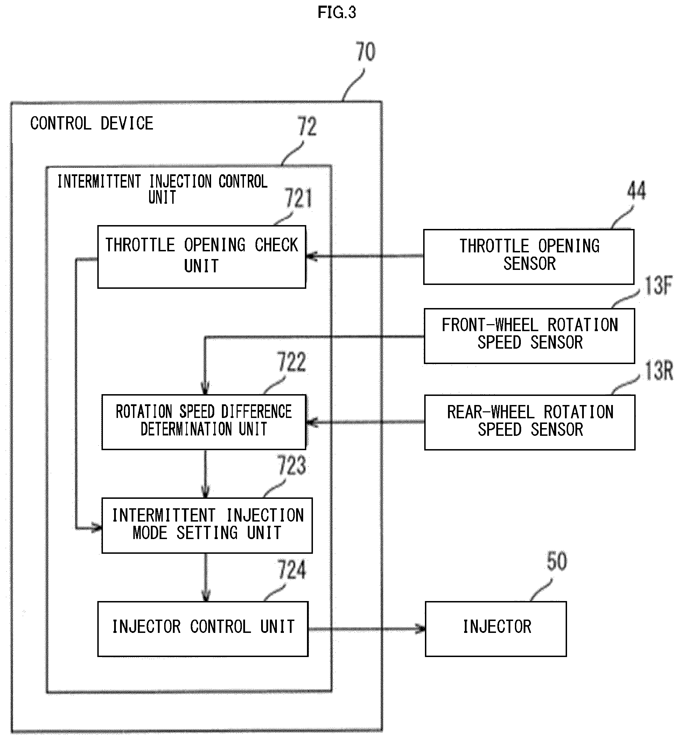

With reference to FIG. 3, the following will describe details of the control device 70. FIG. 3 is a functional block diagram of the control device 70.

The control device 70 includes an intermittent injection control unit 72. The intermittent injection control unit 72 controls the fuel injection of the injector 50 so as to satisfy (A), (B), and (C) described above in the throttle opening constant state.

The intermittent injection control unit 72 is achieved by a central processing unit (CPU) reading a program stored in a nonvolatile memory and executing a predetermined process according to the program, for example.

The fuel injection control by the intermittent injection control unit 72 may be performed while a traction control system, a rev limiter, or a speed limiter is in operation, for example. The traction control system is configured to suppress or reduce slippage of the back wheel. The rev limiter is configured to restrict a revolution speed of the engine 20. The speed limiter is configured to restrict a vehicle speed at which the straddled vehicle 10 travels. In the present embodiment, the fuel injection control by the intermittent injection control unit 72 is performed for the traction control system.

The intermittent injection control unit 72 includes a throttle opening check unit 721, a rotation speed difference determination unit 722, an intermittent injection mode setting unit 723, and an injector control unit 724. These will be described below.

Each of the throttle opening check unit 721, the rotation speed difference determination unit 722, the intermittent injection mode setting unit 723, and the injector control unit 724 is achieved by the CPU reading a program stored in the nonvolatile memory and executing a predetermined process according to the program, for example.

The throttle opening check unit 721 checks an opening degree of the throttle valve based on a signal from the throttle opening sensor 44.

The rotation speed difference determination unit 722 determines whether or not a rotation speed difference value, which is a difference between a rotation speed of the front wheel 12F and a rotation speed of the back wheel 12R, is higher than a predetermined determination difference value. The predetermined determination difference value is stored in a memory (not shown), for example.

The straddled vehicle 10 further includes a front-wheel rotation speed sensor 13F and a back-wheel rotation speed sensor 13R. The front-wheel rotation speed sensor 13F detects a rotation speed of the front wheel 12F, and inputs, to the control device 70, a signal indicating the detected rotation speed of the front wheel 12F. The back-wheel rotation speed sensor 13R detects a rotation speed of the back wheel 12R, and inputs, to the control device 70, a signal indicating the detected rotation speed of the back wheel 12R.

The rotation speed difference determination unit 722 calculates the rotation speed difference value based on the signal from the front-wheel rotation speed sensor 13F and the signal from the back-wheel rotation speed sensor 13R. The rotation speed difference determination unit 722 determines whether or not the calculated rotation speed difference value is higher than the predetermined determination difference value.

The intermittent injection mode setting unit 723 sets a fuel injection mode of the injector 50 based on the check result given by the throttle opening check unit 721 and the determination result given by the rotation speed difference determination unit 722. More specifically, in a case where the rotation speed difference determination unit 722 determines that the rotation speed difference value is higher than the predetermined determination difference value, the intermittent injection mode setting unit 723 sets a fuel injection mode (more specifically, a ratio of the minimum fuel injection to the intermediate fuel injection) of the injector 50 so as to satisfy (A), (B), and (C) described above. The intermittent injection mode setting unit 723 sets a fuel injection mode (more specifically, a fuel injection amount) of the injector 50 based on the opening degree of the throttle valve checked by the throttle opening check unit 721.

According to the fuel injection mode of the injector 50 set by the intermittent injection mode setting unit 723, a fuel injection amount for the minimum fuel injection is adequately smaller than a fuel injection amount for the intermediate fuel injection. The fuel injection amount for the minimum fuel injection is smaller than a half of the fuel injection amount for the intermediate fuel injection, for example. Preferably, the fuel injection amount for the minimum fuel injection is smaller than one-tenth of the fuel injection amount for the intermediate fuel injection. More preferably, the fuel injection amount for the minimum fuel injection is smaller than one-twentieth of the fuel injection amount for the intermediate fuel injection. The fuel injection amount for the minimum fuel injection encompasses nil. In the present embodiment, the fuel injection amount for the minimum fuel injection is nil.

According to the fuel injection mode of the injector 50 set by the intermittent injection mode setting unit 723, the fuel injection amount for the intermediate fuel injection is greater than the fuel injection amount for the minimum fuel injection. In the present embodiment, an air-fuel ratio of an air-fuel mixture generated as a result of the intermediate fuel injection is greater than the stoichiometric air-fuel ratio. That is, at the time of the intermediate fuel injection, the air-fuel mixture in the combustion chamber 224 is burnt in a so-called lean burn.

As for the fuel injection mode of the injector 50 set by the intermittent injection mode setting unit 723, the expression "two of the plural minimum fuel injections taking place intermittently" encompasses an aspect in which an additional minimum fuel injection exists between the two minimum fuel injections. In other words, the above expression includes an aspect in which the intermediate fuel injections and the minimum fuel injections take place alternately between the two of the plural minimum fuel injections.

As for the fuel injection mode of the injector 50 set by the intermittent injection mode setting unit 723, the aspect in which "amounts of the fuel injections for at least two of the plural intermediate fuel injections differ from each other" may be an aspect in which the fuel injection amount decreases in a stepwise manner between at least two of the plural intermediate fuel injections or an aspect in which the fuel injection amount increases in a stepwise manner between at least two of the plural intermediate fuel injections, for example. The "at least two of the plural intermediate fuel injections" are not limited to the ones taking place successively.

The intermittent injection mode setting unit 723 sets a ratio of the minimum fuel injection to the intermediate fuel injection according to a relation between the rotation speed difference value and the predetermined determination difference value. More specifically, the intermittent injection mode setting unit 723 sets the ratio of the minimum fuel injection to the intermediate fuel injection according to a degree of difference between the rotation speed difference value and the predetermined determination difference value. The intermittent injection mode setting unit 723 increases the proportion of the minimum fuel injection to the intermediate fuel injection, as the difference between the rotation speed difference value and the predetermined determination difference value increases. In short, the fuel injection mode of the injector 50 set by the intermittent injection mode setting unit 723 is selected in consideration of the ratio of the minimum fuel injection to the intermediate fuel injection.

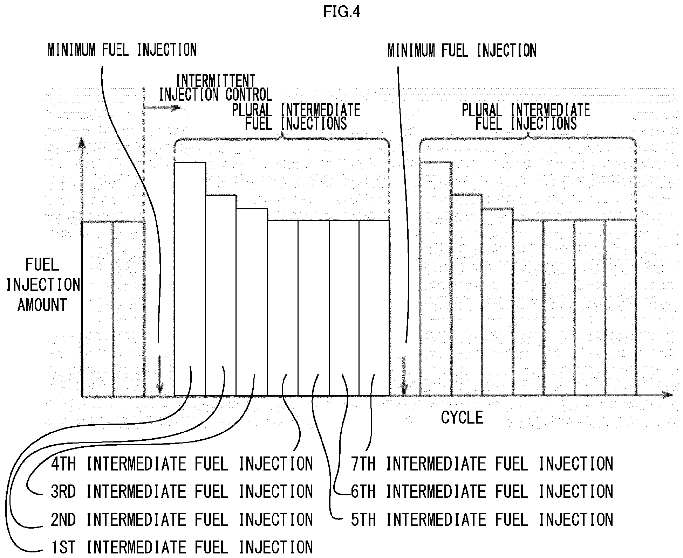

FIG. 4 shows one example of a fuel injection mode of the injector 50 that is set in a case where the difference between the rotation speed difference value and the predetermined determination difference value is small. The following will describe the fuel injection mode shown in FIG. 4.

In the example shown in FIG. 4, the minimum fuel injection takes place in one cycle out of eight cycles. In the present embodiment, since the engine 20 is a four-stroke engine, the intake stroke, the compression stroke, the combustion stroke (expansion stroke), and the exhaust stroke constitute one cycle. The fuel injection amount for the minimum fuel injection is nil. In other words, the injector 50 does not perform fuel injection in one cycle out of eight cycles.

Between one minimum fuel injection and another minimum fuel injection, an intermediate fuel injection takes place plural times (seven times in the example shown in FIG. 4). A fuel injection amount for the intermediate fuel injection is greater than a fuel injection amount for the minimum fuel injection.

Of the plural intermediate fuel injections between the two minimum fuel injections, fuel injection amounts for the first to third intermediate fuel injections are greater than fuel injection amounts for the fourth to seventh intermediate fuel injections. This will be described specifically below.

The fuel injection amounts for the first to third intermediate fuel injections differ from each other. More specifically, the fuel injection amount for the second intermediate fuel injection is smaller than the fuel injection amount for the first intermediate fuel injection. The fuel injection amount for the third intermediate fuel injection is smaller than the fuel injection amount for the second intermediate fuel injection. That is, the fuel injection amount decreases in a stepwise manner from the first intermediate fuel injection to the third intermediate fuel injection. Each of the fuel injection amounts for the first to third intermediate fuel injections is greater than a fuel injection amount determined according to an opening degree of the throttle valve 40. That is, each of the fuel injection amounts for the first to third intermediate fuel injections is greater than a fuel injection amount for a fuel injection performed immediately before the intermittent injection control by the intermittent injection control unit 723 is performed in the state where the throttle valve 40 is open and an opening degree thereof is constant. The fuel injection amount for the fuel injection performed immediately before the intermittent injection control by the intermittent injection control unit 723 is performed in the state where the throttle valve 40 is open and the opening degree thereof is constant is set so as to make the air-fuel mixture in the combustion chamber 224 have an air-fuel ratio greater than the stoichiometric air-fuel ratio, for example. The fuel injection amount for the first intermediate fuel injection, i.e., the fuel injection amount for the intermediate fuel injection that follows the minimum fuel injection is greater than the fuel injection amount determined according to the opening degree of the throttle valve 40. In other words, the fuel injection amount for the intermediate fuel injection that follows the minimum fuel injection is greater than the fuel injection amount for the fuel injection performed immediately before the intermittent injection control by the intermittent injection control unit 723 is performed in the state where the throttle valve 40 is open and the opening degree thereof is constant.

The fuel injection amounts for the fourth to seventh intermediate fuel injections are equal to each other. That is, the fuel injection amount does not vary for the fourth to seventh intermediate fuel injections. Each of the fuel injection amounts for the fourth to seventh intermediate fuel injections is equal to the fuel injection amount determined according to the opening degree of the throttle valve 40. That is, each of the fuel injection amounts for the fourth to seventh intermediate fuel injections is equal to the fuel injection amount for the fuel injection performed immediately before the intermittent injection control by the intermittent injection control unit 723 is performed in the state where the throttle valve 40 is open and the opening degree thereof is constant.

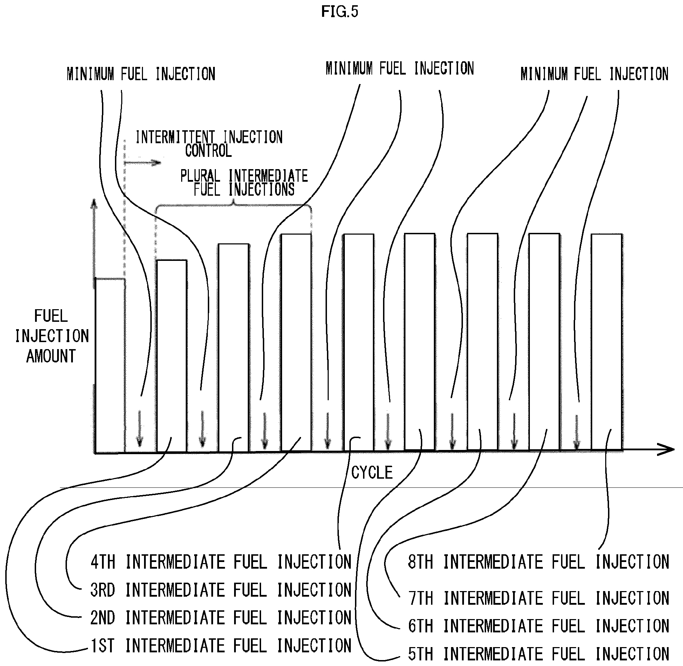

FIG. 5 shows one example of a fuel injection mode of the injector 50 that is set in a case where the difference between the rotation speed difference value and the predetermined determination difference value is great. The following will describe the fuel injection mode shown in FIG. 5.

In the example shown in FIG. 5, the minimum fuel injection takes place in four cycles out of eight cycles. In the present embodiment, since the engine 20 is a four-stroke engine, the intake stroke, the compression stroke, the combustion stroke (expansion stroke), and the exhaust stroke constitute one cycle. The minimum fuel injections and the intermediate fuel injections take place alternately. The fuel injection amount for the intermediate fuel injection is greater than the fuel injection amount determined according to an opening degree of the throttle valve 40. An air-fuel ratio of an air-fuel mixture generated as a result of the intermediate fuel injection is greater than the stoichiometric air-fuel ratio. In a case where the intermediate fuel injection takes place, the air-fuel mixture in the combustion chamber 224 is burnt in a so-called lean burn. The fuel injection amount for the minimum fuel injection is nil. In other words, the injector 50 does not perform a fuel injection in four cycles out of eight cycles.

Between the first minimum fuel injection and the fourth minimum fuel injection out of the plural minimum fuel injections, the intermediate fuel injection takes place plural times (three times in the example shown in FIG. 5). The fuel injection amounts for the plural intermediate fuel injections differ from each other. More specifically, the fuel injection amount for the second intermediate fuel injection is greater than the fuel injection amount for the first intermediate fuel injection. The fuel injection amount for the third intermediate fuel injection is greater than the fuel injection amount for the second intermediate fuel injection. That is, the fuel injection amount increases in a stepwise manner between the plural (three in the example shown in FIG. 5) intermediate fuel injections that are performed between the first minimum fuel injection and the fourth minimum fuel injection out of the plural minimum fuel injections. Each of the fuel injection amounts for the plural intermediate fuel injections is greater than a fuel injection amount for a fuel injection taken place according to an opening degree of the throttle valve 40. That is, each of the fuel injection amounts for the plural intermediate fuel injections is greater than the fuel injection amount for the fuel injection performed immediately before the intermittent injection control by the intermittent injection control unit 723 is performed in a state where the throttle valve 40 is open and the opening degree thereof is constant. In other words, the fuel injection amount for the intermediate fuel injection that follows the minimum fuel injection is greater than the fuel injection amount for the fuel injection performed immediately before the intermittent injection control by the intermittent injection control unit 723 is performed in the state where the throttle valve 40 is open and the opening degree thereof is constant. The fuel injection amount for the fuel injection performed immediately before the intermittent injection control by the intermittent injection control unit 723 is performed in the state where the throttle valve 40 is open and the opening degree thereof is constant is set so as to make the air-fuel mixture in the combustion chamber 224 have an air-fuel ratio greater than the stoichiometric air-fuel ratio, for example.

The fuel injection amounts for the fourth intermediate fuel injection and its subsequent intermediate fuel injections are equal to each other. That is, the fuel injection amount does not vary between the fourth intermediate fuel injection and its subsequent intermediate fuel injections. The fuel injection amounts for the fourth intermediate fuel injection and its subsequent intermediate fuel injections are equal to the fuel injection amount for the third intermediate fuel injection. That is, each of the fuel injection amounts for the fourth intermediate fuel injection and its subsequent intermediate fuel injections is greater than the fuel injection amount for the fuel injection performed immediately before the intermittent injection control by the intermittent injection control unit 723 is performed in the state where the throttle valve 40 is open and the opening degree thereof is constant.

Referring to FIG. 3, the injector control unit 724 controls the fuel injection of the injector 50 according to the fuel injection mode having been set by the intermittent injection mode setting unit 723.

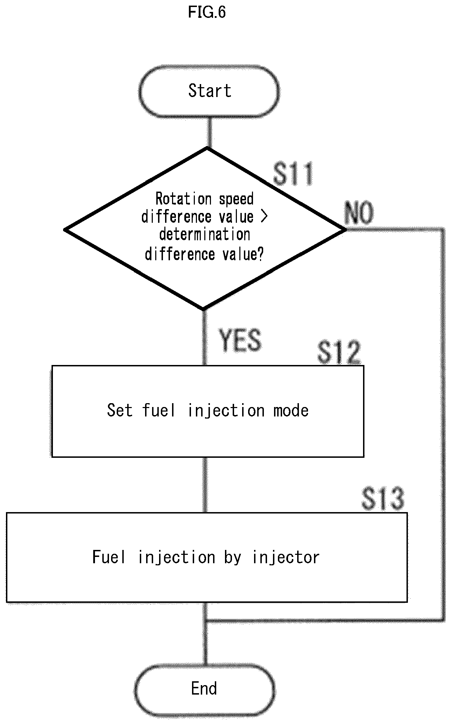

With reference to FIG. 6, the following will describe the intermittent injection control by the control device 70. FIG. 6 is a flowchart of the intermittent injection control by the control device 70. The intermittent injection control by the control device 70 is repeatedly performed during a period in which the engine 20 is driving.

First, the control device 70 determines whether or not the rotation speed difference value is greater than the predetermined determination difference value in step S11. If the rotation speed difference value is smaller than the predetermined determination difference value (NO in step S11), the control device 70 ends the intermittent injection control.

If the rotation speed difference value is greater than the predetermined determination difference value (YES in step S11), the control device 70 sets a fuel injection mode of the injector 50 in step S12. More specifically, the control device 70 sets a ratio of the minimum fuel injection to the intermediate fuel injection according to the degree of difference between the rotation speed difference value and the predetermined determination difference value.

Subsequently, in step S13, the control device 70 controls the injector 50 according to the fuel injection mode of the injector 50 having been set in step S12. Then, the control device 70 ends the intermittent injection control.

Whether or not the intermittent injection control by the control device 70 is executed can be made in the following manner, for example.

The straddled vehicle 10 is driven on a chassis dynamometer. During this, the straddled vehicle is brought into a state where the throttle valve 40 is open and an opening degree of the throttle valve 40 is constant. In this state, the traction control system is activated. More specifically, the back wheel 12R is slipped. Note that the back wheel 12R does not have to be slipped actually. The slippage of the back wheel 12R can be achieved by, e.g., inputting a pseudo signal as a signal indicating a rotation speed of the back wheel 12R. By referring to an operating voltage of the injector 50 during a period in which the back wheel 12R is slipped, it is possible to determine whether or not the intermittent injection control by the control device 70 is executed. In order to determine whether or not the intermittent injection control by the control device 70 is executed, not only the opening degree of the throttle valve 40 but also the revolution speed of the engine 20, the intake temperature, the temperature of the coolant for cooling the engine 20, and/or the like may be referred to as needed.

In the straddled vehicle 10 configured as above, the control device 70 controls the fuel injection of the injector 50 so as to satisfy (A), (B), and (C) described above while the traction control system is in operation. During this, exhaust gas discharged from the combustion chamber 224 is purified by the main catalyst 681 of the catalyst part 68.

In the straddled vehicle 10, it is possible to suppress or reduce an excessive increase in temperature of the main catalyst 681, even while the intermittent injection control by the control device 70 is in operation. Therefore, it is possible to enhance the exhaust gas purification performance of the main catalyst 681 even without enlarging the main catalyst 681. Consequently, it is possible to achieve freedom in arrangement of the main catalyst 681.

### [Example]

A temperature of the main catalyst (hereinafter, referred to as a catalyst temperature) while the intermittent injection control by the control device was in operation was measured. The catalyst temperature is the highest temperature among catalyst temperatures measured with plural (six in the present example) temperature sensors (thermocouples in the present example) attached to the main catalyst. The measured catalyst temperatures are shown in Table 1.

**[Table 1]**

| | | TARGET AIR-FUEL RATIO (A/F) : X1 | | TARGET AIR-FUEL RATIO (A/F):X2 | |
|---|---|---|---|---|---|
| | | the present example | comparative example | the present example | comparative example |
| MIN. FUEL INJECTION PERCENTAGE: LOW | ENGINE REVOLUTION. SPEED: LOW REVOLUTION | T11 | T21 (> T11) | T31 | T41 (> T31) |
| | | | (T21-T11) ≒ 10°C | | (T41 - T31) ≒ 40°C |
| | ENGINE REVOLUTION. SPEED: MIDDLE REVOLUTION | T12 | T22 (> T12) | T32 | T42 (> T32) |
| | | | (T22-T12) ≒ 40°C | | (T42 - T32) ≒ 20°C |
| | ENGINE REVOLUTION. SPEED: HIGH REVOLUTION | - | - | - | - |
| MIN. FUEL INJECTION PERCENTAGE: MIDDLE | ENGINE REVOLUTION. SPEED: LOW REVOLUTION | T14 | T24 (> T14) | T34 | T44 (> T34) |
| | | | (T24-T14) ≒ 100°C | | (T44 - T34) ≒ 40°C |
| | ENGINE REVOLUTION. SPEED: MIDDLE REVOLUTION | T15 | T25 (> T15) | T35 | T45 (> T35) |
| | | | (T25-T15) ≒ 190°C | | (T45 - T35) ≒ 80°C |
| | ENGINE REVOLUTION. SPEED: HIGH REVOLUTION | - | - | - | - |
| MIN. FUEL INJECTION PERCENTAGE: HIGH | ENGINE REVOLUTION. SPEED: LOW REVOLUTION | - | - | - | - |
| | ENGINE REVOLUTION. SPEED: MIDDLE REVOLUTION | T18 | T28 (> T18) | T38 | T48 (> T38) |
| | | | (T28-T18) ≒ 310°C | | (T48 - T38) ≒ 290°C |
| | ENGINE REVOLUTION. SPEED: HIGH REVOLUTION | - | - | - | - |

In the present example, a catalyst temperature given with each combination of a proportion of the minimum fuel injection to the intermediate fuel injection in the intermittent injection control and a target air-fuel ratio was measured. Here, the target air-fuel ratio is an air-fuel ratio of an air-fuel mixture in the combustion chamber of the engine. In the present example, a fuel injection amount for a fuel injection taking place while the intermittent injection control by the intermittent injection control unit was in operation with the throttle valve being open and an opening degree thereof being constant was set to be the fuel injection amount making the air-fuel mixture in the combustion chamber have an air-fuel ratio greater than the stoichiometric air-fuel ratio. That is, in the present example, two target air-fuel ratios were each set so as to make the air-fuel mixture in the combustion chamber of the engine have an air-fuel ratio greater than the stoichiometric air-fuel ratio.

The catalyst temperature was measured both in the present example and a comparative example. Here, the present example corresponds to a case where the control device 70 controls the fuel injection of the injector so as to satisfy the above-described (A), (B), and (C). Meanwhile, the comparative example corresponds to a case where the control device controls the fuel injection of the injector so as not to satisfy only (C) among (A), (B), and (C) described above, i.e., so as to make fuel injection amounts for plural intermediate fuel injections equal to each other.

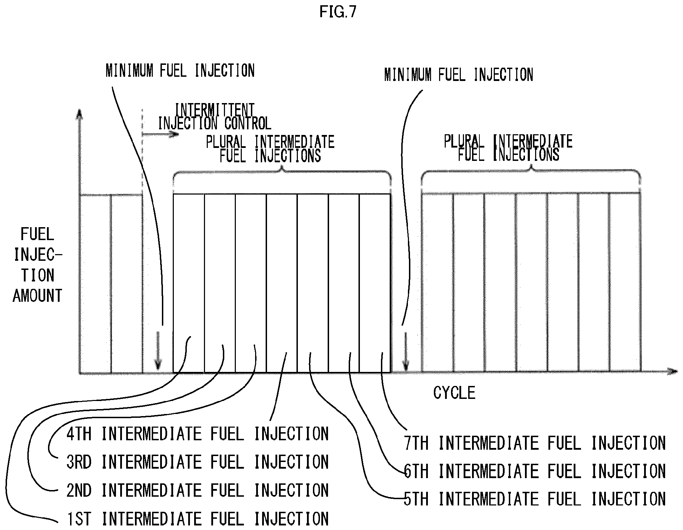

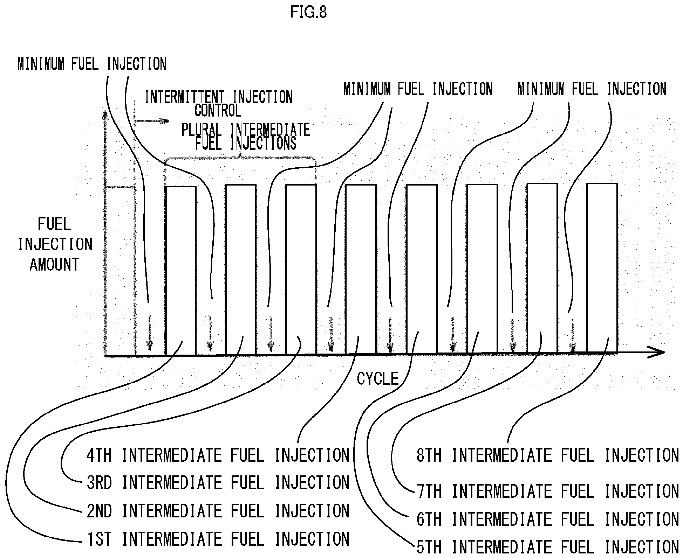

With reference to FIGs. 7 and 8, the following will describe the comparative example. FIG. 7 shows one example of a fuel injection mode of the injector that is set in a case where a difference between a rotation speed difference value and a predetermined determination difference value is small. FIG. 8 shows one example of a fuel injection mode of the injector that is set in a case where the difference between the rotation speed difference value and the predetermined determination difference value is great.

In the example shown in FIG. 7, the minimum fuel injection takes place in one cycle out of eight cycles, similarly to the example shown in FIG. 4. In the example shown in FIG. 7, fuel injection amounts for plural intermediate fuel injections taking place between two minimum fuel injections are equal to each other, unlike in the example shown in FIG. 4.

In the example shown in FIG. 8, the minimum fuel injection takes place in four cycles out of eight cycles, similarly to the example shown in FIG. 5. In the example shown in FIG. 8, fuel injection amounts for any intermediate fuel injections are equal to each other, unlike in the example shown in FIG. 5.

As shown in Table 1, the catalyst temperatures in the present example were lower than those of the comparative example. In the present example, particularly in a case where a proportion of the minimum fuel injection to the intermediate fuel injection in the intermittent injection control was high, an excessive increase in catalyst temperature could be suppressed or reduced. The reasons for this can be assumed as below, for example.

When the injector injects fuel into the intake passage part, the fuel partially remains in the intake passage part. When the minimum fuel injection takes place, the fuel residue in the intake passage part is sent to the combustion chamber. In a case where a proportion of the minimum fuel injection to the intermediate fuel injection in the intermittent injection control is high, the amount of fuel residue in the intake passage part is small at the time of the intermediate fuel injection. Thus, in the comparative example, incomplete combustion was likely to occur at the time of the intermediate fuel injection, and thus hydrocarbon (HC), which is unburnt gas, was generated in a large amount. Accordingly, hydrocarbon (HC), which is unburnt gas, was burnt in the catalyst, and consequently the catalyst temperature became excessively high. Meanwhile, in the present example, the fuel injection amount for the intermediate fuel injection that followed the minimum fuel injection was great. Accordingly, incomplete combustion hardly occurred at the time of the intermediate fuel injection, and thus hydrocarbon (HC), which is unburnt gas, was generated in a small amount. This could suppress or reduce an excessive increase in catalyst temperature.

Note that, in the present example, the catalyst temperature tended to decrease regardless of a proportion of the minimum fuel injection to the intermediate fuel injection in the intermittent injection control and the revolution speed of the engine.

### (Other Embodiments)

The embodiments and variations thereof described herein and/or shown in the drawings are given to facilitate understanding of the present teaching, and do not limit the idea of the present teaching. The embodiments and variations thereof can be modified and/or improved within the scope of the present invention as defined by the claims.

In the embodiment described above, the injector 50 is disposed in the internal intake passage part 32. Alternatively, the injector 50 may be disposed in the external intake passage part 34.

In the embodiment described above, the fuel injection amount for the minimum fuel injection is nil. Alternatively, the fuel injection amount for the minimum fuel injection may not be nil.

In the embodiment described above, the catalyst part 68 is disposed such that the flow direction of the exhaust gas in the catalyst part 68 lies along the vehicle up-down direction UD. Alternatively, the catalyst part 68 may be disposed such that the flow direction of the exhaust gas in the catalyst part 68 lies along the vehicle left-right direction LR. Even in this case, the length of the catalyst part 68 in the vehicle front-back direction FB can be shortened. This can suppress or reduce an increase in size of the straddled vehicle in the vehicle front-back direction FB, where the catalyst part 68 is disposed in front of the engine 20 as in the present embodiment.

In the embodiment described above, the catalyst part 68 is entirely positioned further upstream than the silencer 66 in the flow direction of the exhaust gas in the external exhaust passage part 64. Alternatively, the catalyst part 68 may be at least partially or entirely positioned inside the silencer 66.

In the embodiment described above, the catalyst part 68 is entirely positioned more forward than the rotational center axis line Cr of the crankshaft 241 in the vehicle front-back direction FB. Alternatively, the catalyst part 68 may be at least partially or entirely positioned more backward than the rotational center axis line Cr of the crankshaft 241 in the vehicle front-back direction FB.

In the embodiment described above, the catalyst part 68 is at least partially positioned more downward than the horizontal plane HP1. Alternatively, the catalyst part 68 may be entirely positioned more upward or downward than the horizontal plane HP1.

In the embodiment described above, the catalyst part 68 is partially positioned further forward than the straight line L1 in the vehicle front-back direction FB when viewed in the vehicle left direction L or the vehicle right direction R. Alternatively, the catalyst part 68 may be entirely positioned further forward than the straight line L1 in the vehicle front-back direction FB when viewed in the vehicle left direction L or the vehicle right direction R.

In the embodiment described above, the catalyst part 68 is partially positioned further backward than the straight line L1 in the vehicle front-back direction FB when viewed in the vehicle left direction L or the vehicle right direction R. Alternatively, the catalyst part 68 may be entirely positioned further backward than the straight line L1 in the vehicle front-back direction FB when viewed in the vehicle left direction L or the vehicle right direction R.

In the embodiment described above, the straddled vehicle 10 may include an exhaust gas cooling passage part through which a refrigerant for cooling exhaust gas flows.

In the embodiment described above, the present teaching is applied to the straddled vehicle including the engine disposed such that the center axis line of the cylinder bore lies along the vehicle up-down direction. Alternatively, of course, the present teaching is also applicable to a straddled vehicle including an engine disposed such that a center axis line of a cylinder bore lies along a vehicle front-back direction, for example. For example, the straddled vehicle including the engine disposed such that the center axis line of the cylinder bore lies along the vehicle front-back direction may be a scooter.

In the embodiment described above, the present teaching is applied to the straddled vehicle including the engine disposed such that the rotational center axis line of the crankshaft lies along the vehicle left-right direction. Alternatively, of course, the present teaching is also applicable to a straddled vehicle including an engine disposed such that a rotational center axis line of a crankshaft lies along a vehicle front-back direction, for example. For example, the engine disposed such that the rotational center axis line of the crankshaft lies along the vehicle front-back direction may be a horizontally-opposed engine or a vertically-mounted, V-shaped engine.

### Reference Signs List

- 10: straddled vehicle
- 12F: front wheel
- 19: accelerator operator
- 20: engine
- 224: combustion chamber
- 22A: cylinder bore
- 241: crankshaft
- 30: intake passage part
- 30A: intake passage
- 32: internal intake passage part
- 32A: internal intake passage
- 34: external intake passage part
- 34A: external intake passage
- 40: throttle valve
- 50: injector
- 60: exhaust passage part
- 60A: exhaust passage
- 62: internal exhaust passage part
- 62A: internal exhaust passage
- 64: external exhaust passage part
- 64A: external exhaust passage
- 66: silencer
- 68: catalyst part
- 681: main catalyst (catalyst)
- 70: control device

## Claims

1. A straddled vehicle (10) comprising:
an engine (20) including a combustion chamber (224);
an intake passage part (30) forming an intake passage (30A) through which intake air, which is air sucked from atmosphere, flows toward the combustion chamber (224);
a throttle valve (40) disposed in the intake passage part (30), the throttle valve (40) being mechanically connected to an accelerator operator (19) so as to be interlocked with movement of the accelerator operator (19), the accelerator operator (19) being provided to the straddled vehicle (10);
an injector (50) disposed at a location between the throttle valve (40) and the combustion chamber (224), the injector (50) being configured to inject fuel toward the intake air flowing through the intake passage part (30);
an exhaust passage part (60) forming an exhaust passage (60A) through which exhaust gas discharged from the combustion chamber (224) flows; and
a control device (70) configured to control the fuel injection of the injector (50),
wherein
the control device (70) controls the fuel injection of the injector (50) so as to satisfy the following (A), (B), and (C) in a state where the throttle valve (40) is open and an opening degree thereof is constant:
(A) the control device (70) controls the fuel injection of the injector (50) such that a minimum fuel injection, by which the fuel is injected in a minimum fuel injection amount, takes place plural times intermittently while a traction control system, a rev limiter, or a speed limiter is in operation;
(B) the control device (70) controls the fuel injection of the injector (50) such that an intermediate fuel injection takes place plural times between at least two of the plural minimum fuel injections taking place intermittently, the intermediate fuel injection being greater in amount than the fuel injection amount for the minimum fuel injection and the fuel injection amount for the minimum fuel injection is smaller than a half of the fuel injection amount for the intermediate fuel injection, the intermediate fuel injection done by accordingly injecting the fuel into the intake passage part (30); and
(C) the control device (70) controls the fuel injection of the injector (50) such that amounts of the fuel injections for at least two of the plural intermediate fuel injections differ from each other, and
the exhaust passage part (60) includes a catalyst part (68) including a catalyst (681) for purifying the exhaust gas discharged from the combustion chamber (224) in a case where the control device (70) controls the fuel injection of the injector (50) so as to satisfy (A), (B), and (C), wherein
an air-fuel ratio of an air-fuel mixture generated as a result of the intermediate fuel injection is greater than a stoichiometric air-fuel ratio.

2. The straddled vehicle (10) according to claim 1, wherein the fuel injection amount for the minimum fuel injection is nil.

3. The straddled vehicle (10) according to claim 1 or 2, wherein the exhaust passage part (60) further includes a silencer (66) configured to reduce noise caused by the exhaust gas flowing through the exhaust passage part (60), and
the catalyst part (68) is positioned such that at least a portion of the catalyst part (68) is closer to the combustion chamber (224) than the silencer (66) is.

4. The straddled vehicle (10) according to claim 3, wherein the engine (20) includes a crankshaft (241) of which rotational center axis line (Cr) lies along a vehicle left-right direction, and
the catalyst part (68) is positioned such that at least a portion of the catalyst part (68) is more forward than the rotational center axis line (Cr) of the crankshaft (241) in a vehicle front-back direction.

5. The straddled vehicle (10) according to claim 3 or 4, further comprising a front wheel (12F) positioned more forward than the engine (20) in the vehicle front-back direction, wherein
the catalyst part (68) is positioned such that at least a portion of the catalyst part (68) is more downward than a horizontal plane (HP1) passing through a center (12Fo) of the front wheel (12F).

6. The straddled vehicle (10) according to any one of claims 3 to 5, wherein the engine (20) is disposed such that a center axis line (Cy) of a cylinder bore (22A), which defines a part of the combustion chamber (224), lies along a vehicle up-down direction, and
the catalyst part (68) is disposed such that a flow direction of the exhaust gas flowing through the catalyst part (68) lies along the vehicle up-down direction.

7. The straddled vehicle (10) according to any one of claims 3 to 5, wherein the engine (20) is disposed such that a center axis line (Cy) of a cylinder bore (22A), which defines a part of the combustion chamber (224), lies along a vehicle up-down direction, and
the catalyst part (68) is disposed such that a flow direction of the exhaust gas flowing through the catalyst part (68) lies along a vehicle left-right direction.

8. The straddled vehicle (10) according to any one of claims 3 to 5, wherein the engine (20) is disposed such that a center axis line (Cy) of a cylinder bore (22A), which defines a part of the combustion chamber (224), lies along a vehicle front-back direction, and
the catalyst part (68) is disposed such that a flow direction of the exhaust gas flowing through the catalyst part (68) lies along the vehicle front-back direction.

9. The straddled vehicle (10) according to claim 3, wherein the engine (20) includes a crankshaft (241) of which rotational center axis line (Cr) lies along a vehicle direction.

10. The straddled vehicle (10) according to any one of claims 1 to 9, wherein the engine (20) is a single-cylinder engine (20).

11. The straddled vehicle (10) according to any one of claims 1 to 10, wherein the control device (70) is further configured to change a ratio of the minimum fuel injection to the intermediate fuel injection according to a traveling state of the straddled vehicle (10).

12. The straddled vehicle (10) according to any one of claims 1 to 11, further comprising a front wheel (12F) and a rear wheel (12R), wherein
the control device (70) is further configured to change a ratio of the minimum fuel injection to the intermediate fuel injection according to a difference between a rotation speed of the front wheel (12F) and a rotation speed of the rear wheel (12R).

13. A method for controlling a straddled vehicle (10) having an engine (20) including a combustion chamber (224);
an intake passage part (30) forming an intake passage (30A) through which intake air, which is air sucked from atmosphere, flows toward the combustion chamber (224);
a throttle valve (40) disposed in the intake passage part (30), the throttle valve (40) being mechanically connected to an accelerator operator (19) so as to be interlocked with movement of the accelerator operator (19), the accelerator operator (19) being provided to the straddled vehicle (10);
an injector (50) disposed at a location between the throttle valve (40) and the combustion chamber (224), the injector (50) being configured to inject fuel toward the intake air flowing through the intake passage part (30);
an exhaust passage part (60) forming an exhaust passage (60A) through which exhaust gas discharged from the combustion chamber (224) flows; the method comprises:
controlling the fuel injection of the injector (50), wherein
the method comprises controlling the fuel injection of the injector (50) so as to satisfy the following (A), (B), and (C) in a state where the throttle valve (40) is open and an opening degree thereof is constant:
(A) controlling the fuel injection of the injector (50) such that a minimum fuel injection, by which the fuel is injected in a minimum fuel injection amount, takes place plural times intermittently while a traction control system, a rev limiter, or a speed limiter is in operation;
(B) controlling the fuel injection of the injector (50) such that an intermediate fuel injection takes place plural times between at least two of the plural minimum fuel injections taking place intermittently, the intermediate fuel injection being greater in amount than the fuel injection amount for the minimum fuel injection, and the fuel injection amount for the minimum fuel injection is smaller than a half of the fuel injection amount for the intermediate fuel injection, the intermediate fuel injection done by accordingly injecting the fuel into the intake passage part (30); and
(C) controlling the fuel injection of the injector (50) such that amounts of the fuel injections for at least two of the plural intermediate fuel injections differ from each other, and
the exhaust passage part (60) includes a catalyst part (68) including a catalyst (681) for purifying the exhaust gas discharged from the combustion chamber (224) in a case when controlling the fuel injection of the injector (50) so as to satisfy (A), (B), and (C), wherein an air-fuel ratio of an air-fuel mixture generated as a result of the intermediate fuel injection is greater than a stoichiometric air-fuel ratio.

## Patentansprüche

1. Ein Spreiz-Sitz-Fahrzeug (10), das umfasst:
einen Motor (20), der eine Brennkammer (224) beinhaltet;
einen Einlassdurchgangsteil (30), der einen Einlassdurchgang (30A) bildet, durch den Ansaugluft, die Luft ist, die aus der Atmosphäre angesaugt ist, zu der Brennkammer (224) strömt;
ein Drosselventil (40), das in dem Einlassdurchgangsteil (30) angeordnet ist, das Drosselventil (40) ist mechanisch mit einem Beschleuniger-Betätiger (19) verbunden, so dass es mit der Bewegung des Beschleuniger-Betätigers (19) gekoppelt ist, der Beschleuniger-Betätiger (19) ist an dem Spreiz-Sitz-Fahrzeug (10) vorgesehen;
einen Einspritzer (50), der an einer Stelle zwischen der Drosselklappe (40) und der Brennkammer (224) angeordnet ist, der Einspritzer (50) ist konfiguriert, um Kraftstoff in Richtung der Ansaugluft einzuspritzen, die durch den Einlassdurchgangsteil (30) strömt;
einen Abgasdurchgangsteil (60), der einen Abgasdurchgang (60A) bildet, durch den Abgas, das aus der Brennkammer (224) ausgestoßen wird, strömt; und
eine Steuervorrichtung (70), die konfiguriert ist, um die Kraftstoffeinspritzung des Einspritzers (50) zu steuern, wobei
die Steuervorrichtung (70) die Kraftstoffeinspritzung des Einspritzers (50) so steuert, dass die folgenden Bedingungen (A), (B) und (C) in einem Zustand erfüllt werden, in dem die Drosselklappe (40) geöffnet ist und ein Öffnungsgrad derselben konstant ist:
(A) die Steuervorrichtung (70) steuert die Kraftstoffeinspritzung des Einspritzers (50), so dass eine Mindest-Kraftstoffeinspritzung, bei welcher der Kraftstoff in einer minimalen Kraftstoffeinspritzmenge eingespritzt wird, mehrfach intermittierend erfolgt, während ein Traktionskontrollsystem, ein Drehzahlbegrenzer oder ein Geschwindigkeitsbegrenzer in Betrieb ist;
(B) die Steuervorrichtung (70) steuert die Kraftstoffeinspritzung des Einspritzers (50), so dass eine Zwischen-Kraftstoffeinspritzung mehrfach zwischen zumindest zwei der mehreren intermittierend stattfindenden Mindest-Kraftstoffeinspritzungen stattfindet, die Zwischen-Kraftstoffeinspritzung in der Menge ist größer als die Kraftstoffeinspritzmenge für die Mindest-Kraftstoffeinspritzung und die Kraftstoffeinspritzmenge für die Mindest-Kraftstoffeinspritzung ist kleiner als die Hälfte der Kraftstoffeinspritzmenge für die Zwischen-Kraftstoffeinspritzung, die Zwischen-Kraftstoffeinspritzung erfolgt durch entsprechendes Einspritzen des Kraftstoffs in den Einlassdurchgangsteil (30); und
(C) die Steuervorrichtung (70) steuert die Kraftstoffeinspritzung des Einspritzers (50), so dass die Mengen der Kraftstoffeinspritzungen für zumindest zwei der mehreren Zwischen-Kraftstoffeinspritzungen voneinander abweichen, und
der Abgasdurchgangsteil (60) einen Katalysatorteil (68) enthält, der einen Katalysator (681) enthält, zum Reinigen des Abgases, das aus der Brennkammer (224) ausgestoßen ist, in einem Fall, in dem die Steuervorrichtung (70) die Kraftstoffeinspritzung des Einspritzers (50) steuert, so dass (A), (B) und (C) erfüllt werden, wobei
ein Luft-Kraftstoff-Verhältnis eines Luft-Kraftstoff-Gemisches, das durch die Zwischen-Kraftstoffeinspritzung erzeugt ist, größer als ein stöchiometrisches Luft-Kraftstoff-Verhältnis ist.

2. Das Spreiz-Sitz-Fahrzeug (10) gemäß Anspruch 1, wobei die Kraftstoffeinspritzmenge für die Mindest-Kraftstoffeinspritzung gleich Null ist.

3. Das Spreiz-Sitz-Fahrzeug (10) gemäß Anspruch 1 oder 2, wobei der Abgasdurchgangsteil (60) ferner einen Schalldämpfer (66) beinhaltet, der konfiguriert ist, so dass er den Lärm, der durch das Abgas, das durch den Abgasdurchgangsteil (60) strömt, verursacht ist, reduziert, und
der Katalysatorteil (68) angeordnet ist, so dass zumindest ein Teil des Katalysatorteils (68) näher an der Brennkammer (224) liegt als der Schalldämpfer (66).

4. Das Spreiz-Sitz-Fahrzeug (10) gemäß Anspruch 3, wobei der Motor (20) eine Kurbelwelle (241) beinhaltet, deren Rotationsmittelachsenlinie (Cr) entlang einer Fahrzeug-Links-Rechts-Richtung liegt, und
der Katalysatorteil (68) positioniert ist, so dass zumindest ein Abschnitt des Katalysatorteils (68) in einer Fahrzeug-Vorder-Rück-Richtung weiter vorne liegt als die Rotationsmittelachsenlinie (Cr) der Kurbelwelle (241).

5. Das Spreiz-Sitz-Fahrzeug (10) gemäß Anspruch 3 oder 4, das weiterhin ein Vorderrad (12F) aufweist, das in der Fahrzeug-Vorder-Rück-Richtung weiter vorne als der Motor (20) angeordnet ist, wobei
der Katalysatorteil (68) positioniert ist, so dass zumindest ein Teil des Katalysatorteils (68) weiter unten liegt als eine horizontale Ebene (HP1), die durch eine Mitte (12Fo) des Vorderrads (12F) verläuft.

6. Das Spreiz-Sitz-Fahrzeug (10) gemäß irgendeinem der Ansprüche 3 bis 5, wobei der Motor (20) angeordnet ist, so dass eine Mittelachsenlinie (Cy) einer Zylinderbohrung (22A), die einen Teil der Brennkammer (224) definiert, entlang einer Fahrzeug-Auf-Ab-Richtung liegt, und
der Katalysatorteil (68) angeordnet ist, so dass eine Strömungsrichtung des Abgases, das durch den Katalysatorteil (68) strömt, entlang der Fahrzeug-Auf-Ab-Richtung liegt.

7. Das Spreiz-Sitz-Fahrzeug (10) gemäß irgendeinem der Ansprüche 3 bis 5, wobei der Motor (20) angeordnet ist, so dass eine Mittelachsenlinie (Cy) einer Zylinderbohrung (22A), die einen Teil der Brennkammer (224) definiert, entlang einer Fahrzeug-Auf-Ab-Richtung liegt, und
der Katalysatorteil (68) angeordnet ist, so dass eine Strömungsrichtung des Abgases, das durch den Katalysatorteil (68) strömt, entlang einer Fahrzeug-Links-Rechts-Richtung liegt.

8. Das Spreiz-Sitz-Fahrzeug (10) gemäß irgendeinem der Ansprüche 3 bis 5, wobei der Motor (20) angeordnet ist, so dass eine Mittelachsenlinie (Cy) einer Zylinderbohrung (22A), die einen Teil des Brennraums (224) definiert, entlang einer Fahrzeug-Vorder-Rück-Richtung liegt, und
der Katalysatorteil (68) angeordnet ist, dass eine Strömungsrichtung des Abgases, das durch den Katalysatorteil (68) strömt, entlang der Fahrzeug-Vorder-Rück-Richtung liegt.

9. Das Spreiz-Sitz-Fahrzeug (10) gemäß Anspruch 3, wobei wobei der Motor (20) eine Kurbelwelle (241) beinhaltet, deren Rotationsmittelachsenlinie (Cr) entlang einer Fahrzeugrichtung liegt.

10. Das Spreiz-Sitz-Fahrzeug (10) gemäß irgendeinem der Ansprüche 1 bis 9, wobei der Motor (20) ein Ein-Zylindermotor (20) ist.

11. Das Spreiz-Sitz-Fahrzeug (10) gemäß irgendeinem der Ansprüche 1 bis 10, wobei die Steuervorrichtung (70) weiterhin konfiguriert ist, um ein Verhältnis der Mindest-Kraftstoffeinspritzung zur mittleren Kraftstoffeinspritzung entsprechend einem Fahrzustand des Spreiz-Sitz-Fahrzeugs (10) zu ändern.

12. Das Spreiz-Sitz-Fahrzeug (10) gemäß irgendeinem der Ansprüche 1 bis 11, das weiterhin ein Vorderrad (12F) und ein Hinterrad (12R) umfasst, wobei
die Steuervorrichtung (70) weiterhin konfiguriert ist, um ein Verhältnis der Mindest-Kraftstoffeinspritzung zu der mittleren Kraftstoffeinspritzung entsprechend einer Differenz zwischen einer Drehzahl des Vorderrads (12F) und einer Drehzahl des Hinterrads (12R) zu ändern.

13. Ein Verfahren zur Steuerung eines Spreiz-Sitz-Fahrzeugs (10) mit einem Motor (20), der eine Brennkammer (224) enthält;
einen Einlassdurchgangsteil (30), der einen Einlassdurchgang (30A) bildet, durch den Ansaugluft, die Luft ist, die aus der Atmosphäre angesaugt ist, zu der Brennkammer (224) strömt;
ein Drosselventil (40), das in dem Einlassdurchgangsteil (30) angeordnet ist, das Drosselventil (40) ist mechanisch mit einem Beschleuniger-Betätiger (19) verbunden, so dass es mit der Bewegung des Beschleuniger-Betätigers (19) gekoppelt ist, der Beschleuniger-Betätiger (19) ist an dem Spreiz-Sitz-Fahrzeug (10) vorgesehen; einen Einspritzer (50), der an einer Stelle zwischen der Drosselklappe (40) und der Brennkammer (224) angeordnet ist, der Einspritzer (50) ist konfiguriert, um Kraftstoff in Richtung der Ansaugluft einzuspritzen, die durch den Einlassdurchgangsteil (30) strömt;
einen Abgasdurchgangsteil (60), der einen Abgasdurchgang (60A) bildet, durch den Abgas, das aus der Brennkammer (224) ausgestoßen wird, strömt; und
eine Steuervorrichtung (70), die konfiguriert ist, um die Kraftstoffeinspritzung des Einspritzers (50) zu steuern, wobei
die Steuervorrichtung (70) die Kraftstoffeinspritzung des Einspritzers (50) so steuert, dass die folgenden Bedingungen (A), (B) und (C) in einem Zustand erfüllt werden, in dem die Drosselklappe (40) geöffnet ist und ein Öffnungsgrad derselben konstant ist:
(A) die Steuervorrichtung (70) steuert die Kraftstoffeinspritzung des Einspritzers (50), so dass eine Mindest-Kraftstoffeinspritzung, bei welcher der Kraftstoff in einer minimalen Kraftstoffeinspritzmenge eingespritzt wird, mehrfach intermittierend erfolgt, während ein Traktionskontrollsystem, ein Drehzahlbegrenzer oder ein Geschwindigkeitsbegrenzer in Betrieb ist;
(B) die Steuervorrichtung (70) steuert die Kraftstoffeinspritzung des Einspritzers (50), so dass eine Zwischen-Kraftstoffeinspritzung mehrfach zwischen zumindest zwei der mehreren intermittierend stattfindenden Mindest-Kraftstoffeinspritzungen stattfindet, die Zwischen-Kraftstoffeinspritzung in der Menge ist größer als die Kraftstoffeinspritzmenge für die Mindest-Kraftstoffeinspritzung und die Kraftstoffeinspritzmenge für die Mindest-Kraftstoffeinspritzung ist kleiner als die Hälfte der Kraftstoffeinspritzmenge für die Zwischen-Kraftstoffeinspritzung, die Zwischen-Kraftstoffeinspritzung erfolgt durch entsprechendes Einspritzen des Kraftstoffs in den Einlassdurchgangsteil (30); und
(C) die Steuervorrichtung (70) steuert die Kraftstoffeinspritzung des Einspritzers (50), so dass die Mengen der Kraftstoffeinspritzungen für zumindest zwei der mehreren Zwischen-Kraftstoffeinspritzungen voneinander abweichen, und
der Abgasdurchgangsteil (60) einen Katalysatorteil (68) enthält, der einen Katalysator (681) enthält, zum Reinigen des Abgases, das aus der Brennkammer (224) ausgestoßen ist, in einem Fall, in dem die Steuervorrichtung (70) die Kraftstoffeinspritzung des Einspritzers (50) steuert, so dass (A), (B) und (C) erfüllt werden, wobei
ein Luft-Kraftstoff-Verhältnis eines Luft-Kraftstoff-Gemisches, das durch die Zwischen-Kraftstoffeinspritzung erzeugt ist, größer als ein stöchiometrisches Luft-Kraftstoff-Verhältnis ist.

## Revendications

1. Véhicule à enfourcher (10) comprenant :
un moteur (20) comportant une chambre de combustion (224) ;
une partie passage d'admission (30) formant un passage d'admission (30A) à travers lequel de l'air d'admission, qui est de l'air aspiré de l'atmosphère, s'écoule vers la chambre de combustion (224) ;
un boîtier papillon (40) disposé dans la partie passage d'admission (30), le boîtier papillon (40) étant connecté mécaniquement à un actionneur d'accélérateur (19) de manière à s'enclencher avec le déplacement de l'actionneur d'accélérateur (19), l'actionneur d'accélérateur (19) étant pourvu sur le véhicule à enfourcher (10) ;
un injecteur (50) positionné entre le boîtier papillon (40) et la chambre de combustion (224), l'injecteur (50) étant configuré pour injecter du carburant vers l'air d'admission qui s'écoule à travers la partie passage d'admission (30) ;
une partie passage d'échappement (60) formant un passage d'échappement (60A) à travers lequel s'écoule le gaz d'échappement évacué de la chambre de combustion (224) ; et
un dispositif de contrôle (70) configuré pour contrôler l'injection de carburant de l'injecteur (50), dans lequel
le dispositif de contrôle (70) contrôle l'injection de carburant de l'injecteur (50) de manière à répondre aux conditions (A), (B) et (C) dans un état où le boîtier papillon (40) est ouvert et où son degré d'ouverture est constant :
(A) le dispositif de contrôle (70) contrôle l'injection de carburant de l'injecteur (50) de telle sorte qu'une injection de carburant minimale, où le carburant est injecté avec une quantité d'injection de carburant minimale, a lieu plusieurs fois de manière intermittente alors qu'un système de contrôle de traction, un limiteur de régime ou un limiteur de vitesse est en service ;
(B) le dispositif de contrôle (70) contrôle l'injection de carburant de l'injecteur (50) de telle sorte qu'une injection de carburant intermédiaire a lieu plusieurs fois entre au moins deux injections de la pluralité d'injections de carburant minimales qui ont lieu de manière intermittente, l'injection de carburant intermédiaire étant supérieure en quantité à la quantité d'injection de carburant pour l'injection de carburant minimale, et la quantité d'injection de carburant pour l'injection de carburant minimale étant inférieure à la moitié de la quantité d'injection de carburant pour l'injection de carburant intermédiaire, l'injection de carburant intermédiaire étant faite conformément à l'injection du carburant dans la partie passage d'admission (30) ; et
(C) le dispositif de contrôle (70) contrôle l'injection de carburant de l'injecteur (50) de telle sorte que la quantité des injections de carburant d'au moins deux injections de la pluralité d'injections de carburant intermédiaires diffèrent entre elles, et
la partie passage d'échappement (60) comprend une partie catalyseur (68) qui comporte un catalyseur (681) pour purifier les gaz d'échappement évacués de la chambre de combustion (224) dans le cas où le dispositif de contrôle (70) contrôle l'injection de carburant de l'injecteur (50) de manière à répondre aux conditions (A), (B) et (C), dans lequel
le rapport air/carburant d'un mélange air-carburant généré suite à l'injection de carburant intermédiaire est supérieur à un rapport air/carburant stœchiométrique.

2. Véhicule à enfourcher (10) selon la revendication 1, dans lequel la quantité d'injection de carburant pour l'injection de carburant minimale est nulle.

3. Véhicule à enfourcher (10) selon la revendication 1 ou 2, dans lequel
la partie passage d'échappement (60) comprend en outre un silencieux (66) configuré pour réduire le bruit provoqué par l'écoulement des gaz d'échappement à travers la partie passage d'échappement (60), et
la partie catalyseur (68) est positionnée de telle sorte qu'au moins une portion de la partie catalyseur (68) est plus proche de la chambre de combustion (224) que le silencieux (66).

4. Véhicule à enfourcher (10) selon la revendication 3, dans lequel
le moteur (20) comprend un vilebrequin (241) dont la ligne d'axe du centre de rotation (Cr) suit une direction gauche-droite du véhicule, et
la partie catalyseur (68) est positionnée de telle sorte qu'au moins une portion de la partie catalyseur (68) se trouve plus en avant que la ligne d'axe du centre de rotation (Cr) du vilebrequin (241) en direction avant-arrière du véhicule.

5. Véhicule à enfourcher (10) selon la revendication 3 ou 4, comprenant en outre une roue avant (12F) positionnée plus en avant que le moteur (20) en direction avant-arrière du véhicule, dans lequel
la partie catalyseur (68) est positionnée de telle sorte qu'au moins une portion de la partie catalyseur (68) se trouve plus bas qu'un plan horizontal (HP1) qui traverse le centre (12Fo) de la roue avant (12F).

6. Véhicule à enfourcher (10) selon l'une quelconque des revendications 3 à 5, dans lequel
le moteur (20) est disposé de telle sorte que la ligne de l'axe central (Cy) de l'alésage de cylindre (22A), qui définit une partie chambre de combustion (224), suit une direction haut-bas du véhicule, et
la partie catalyseur (68) est disposée de telle sorte que la direction d'écoulement des gaz d'échappement qui traversent la partie catalyseur (68) suit la direction haut-bas du véhicule.

7. Véhicule à enfourcher (10) selon l'une quelconque des revendications 3 à 5, dans lequel
le moteur (20) est disposé de telle sorte que la ligne de l'axe central (Cy) de l'alésage de cylindre (22A), qui définit une partie chambre de combustion (224), suit une direction haut-bas du véhicule, et
la partie catalyseur (68) est disposée de telle sorte que la direction d'écoulement des gaz d'échappement qui traversent la partie catalyseur (68) suit la direction gauche-droite du véhicule.

8. Véhicule à enfourcher (10) selon l'une quelconque des revendications 3 à 5, dans lequel
le moteur (20) est disposé de telle sorte que la ligne de l'axe central (Cy) de l'alésage de cylindre (22A), qui définit une partie chambre de combustion (224), suit une direction avant-arrière du véhicule, et
la partie catalyseur (68) est disposée de telle sorte que la direction d'écoulement des gaz d'échappement qui traversent la partie catalyseur (68) suit la direction avant-arrière du véhicule.

9. Véhicule à enfourcher (10) selon la revendication 3, dans lequel le moteur (20) comprend un vilebrequin (241) dont la ligne d'axe du centre de rotation (Cr) suit une direction du véhicule.

10. Véhicule à enfourcher (10) selon l'une quelconque des revendications 1 à 9, dans lequel le moteur (20) est un moteur monocylindre (20).

11. Véhicule à enfourcher (10) selon l'une quelconque des revendications 1 à 10, dans lequel le dispositif de contrôle (70) est en outre configuré pour changer le ratio de l'injection de carburant minimale à l'injection de carburant intermédiaire conformément à un état de circulation du véhicule à enfourcher (10).

12. Véhicule à enfourcher (10) selon l'une quelconque des revendications 1 à 11, comprenant en outre une roue avant (12F) et une roue arrière (12R), dans lequel
le dispositif de contrôle (70) est en outre configuré pour changer le ratio de l'injection de carburant minimale à l'injection de carburant intermédiaire conformément à une différence entre la vitesse de rotation de la roue avant (12F) et la vitesse de rotation de la roue arrière (12R).

13. Procédé de contrôle d'un véhicule à enfourcher (10), comprenant
un moteur (20) comportant une chambre de combustion (224) ;
une partie passage d'admission (30) formant un passage d'admission (30A) à travers lequel de l'air d'admission, qui est de l'air aspiré de l'atmosphère, s'écoule vers la chambre de combustion (224) ;
un boîtier papillon (40) disposé dans la partie passage d'admission (30), le boîtier papillon (40) étant connecté mécaniquement à un actionneur d'accélérateur (19) de manière à s'enclencher avec le déplacement de l'actionneur d'accélérateur (19), l'actionneur d'accélérateur (19) étant pourvu sur le véhicule à enfourcher (10) ;
un injecteur (50) positionné entre le boîtier papillon (40) et la chambre de combustion (224), l'injecteur (50) étant configuré pour injecter du carburant vers l'air d'admission qui s'écoule à travers la partie passage d'admission (30) ;
une partie passage d'échappement (60) formant un passage d'échappement (60A) à travers lequel s'écoule le gaz d'échappement évacué de la chambre de combustion (224) ;
le procédé comprenant le contrôle de l'injection de carburant de l'injecteur (50), dans lequel
le procédé comprend le contrôle de l'injection de carburant de l'injecteur (50) de manière à répondre aux conditions (A), (B) et (C) dans un état où le boîtier papillon (40) est ouvert et où son degré d'ouverture est constant :
(A) le contrôle de l'injection de carburant de l'injecteur (50) est tel qu'une injection de carburant minimale, où le carburant est injecté avec une quantité d'injection de carburant minimale, a lieu plusieurs fois de manière intermittente alors qu'un système de contrôle de traction, un limiteur de régime ou un limiteur de vitesse est en service ;
(B) le contrôle de l'injection de carburant de l'injecteur (50) est tel qu'une injection de carburant intermédiaire a lieu plusieurs fois entre au moins deux injections de la pluralité d'injections de carburant minimales qui ont lieu de manière intermittente, l'injection de carburant intermédiaire étant supérieure en quantité à la quantité d'injection de carburant pour l'injection de carburant minimale, et la quantité d'injection de carburant pour l'injection de carburant minimale étant inférieure à la moitié de la quantité d'injection de carburant pour l'injection de carburant intermédiaire, l'injection de carburant intermédiaire étant faite conformément à l'injection du carburant dans la partie passage d'admission (30) ; et
(C) le contrôle de l'injection de carburant de l'injecteur (50) est tel que la quantité des injections de carburant d'au moins deux injections de la pluralité d'injections de carburant diffèrent entre elles, et
la partie passage d'échappement (60) comprend une partie catalyseur (68) qui comporte un catalyseur (681) pour purifier les gaz d'échappement évacués de la chambre de combustion (224) dans le cas où le contrôle de l'injection de carburant de l'injecteur (50) répond aux conditions (A), (B) et (C), dans lequel le rapport air/carburant d'un mélange air-carburant généré suite à l'injection de carburant intermédiaire est supérieur à un rapport air/carburant stœchiométrique.
